# EUROPEAN PATENT APPLICATION

(11) **EP 4 546 941 A1**
(43) Date of publication of application: **30.04.2025**
(21) Application number: 24208912.6
(22) Date of filing: 25.10.2024
(51) Int. Cl.: H04W 84/12, H04W 74/0816, H04W 56/00

(54) **ACCESS POINT ASSISTED CHANNEL SYNCHRONIZATION**

(30) Priority: 25.10.2023 US 202363545562 P
(71) Applicant: Comcast Cable Communications LLC, Philadelphia, Pennsylvania 19103 (US)
(72) Inventor: LANANTE, Leonardo Alisasis, Philadelphia, PA, 19103 (US); KIM, Jeongki, Philadelphia, PA, 19103 (US); DINAN, Esmael Hejazi, Philadelphia, PA, 19103 (US); ZHANG, Jiayi, Philadelphia, PA, 19103 (US); ERKUCUK, Serhat, Philadelphia, PA, 19103 (US); BAYKAS, Tuncer, Philadelphia, PA, 19103 (US)
(74) Representative: V.O.

(57) **Abstract**

An access point may communicate stations over a plurality of channels. The access point may indicate support of, and/or duration for, synchronization via at least one of the channels. Based on the indicated support and a transmission detected on a primary channel, operation may be switched from the primary channel to an auxiliary channel. Communication between the access point and a station may be conducted via the auxiliary channel during the duration after a synchronization frame is sent to inform the station for an availability of the auxiliary channel.

## Description

### CROSS-REFERENCE TO RELATED APPLICATIONS

This application claims the benefit of U.S. Provisional Application No. 63/545,562, filed on October 25, 2023. The above referenced application is hereby incorporated by reference in its entirety.

### BACKGROUND

An access point communicates with stations. Data units are communicated between the access point and stations.

### SUMMARY

The following summary presents a simplified summary of certain features. The summary is not an extensive overview and is not intended to identify key or critical elements.

An access point may communicate with one or more computing devices, such as stations, via a plurality of channels. The access point may indicate support of, and/or a duration for, synchronization via a channel. Based on the indicated support and a transmission detected on a primary channel, operation may be switched from the primary channel to an auxiliary channel. A synchronization frame may be sent to inform a station for an availability of the auxiliary channel. Communication between the access point and the station may be conducted via the auxiliary channel during the synchronization duration.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1 shows example wireless communication networks.
FIG. 2 shows a block diagram showing example implementations of a station (STA) and an access point (AP).
FIG. 3 shows an example of a Medium Access Control (MAC) frame format.
FIG. 4 shows an example trigger frame.
FIG. 5 shows an example multi-user request to send (MU-RTS) trigger frame.
FIG. 6 shows an example common info field.
FIG. 7 shows an example of a Request-to-Send (RTS)/Clear-to-Send (CTS) procedure.
FIG. 8 shows an example of a wideband RTS/CTS procedure.
FIG. 9 shows an example of a wideband RTS/CTS procedure that uses a bandwidth signaling RTS frame.
FIG. 10 shows an example of a MU-RTS/CTS procedure.
FIG. 11 shows an example of a multiple primary channel (MPC) STA operation.
FIG. 12 shows example virtual and physical carrier sense (CS) functions associated with primary and secondary channels for an MPC STA and a non-MPC STA.
FIG. 13 shows an example of contrasting the operation of a concurrent CCA MPC STA and the operation of a non-concurrent CCA MPC STA.
FIG. 14 shows another example of contrasting the operation of a concurrent CCA MPC STA and the operation of a non-concurrent CCA MPC STA.
FIG. 15 shows an example procedure which may be performed by an AP over a plurality of channels.
FIG. 16 shows another example procedure which may be performed by an AP over a plurality of channels.
FIG. 17 shows another example procedure which may be performed by an AP over a plurality of channels.
FIG. 18 shows an example procedure which may be performed by a non-concurrent CCA MPC STA.
FIG. 19 shows an information element as an "anchor channel element" or an "auxiliary primary channel element".
FIG. 20 shows an example process performed by an AP over a plurality of channels.
FIG. 21 shows another example process performed by a STA over a plurality of channels.
FIG. 22 shows another example process by a STA over a plurality of channels.
FIG. 23 shows example elements of a computing device that may be used to implement any of the various devices described herein.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

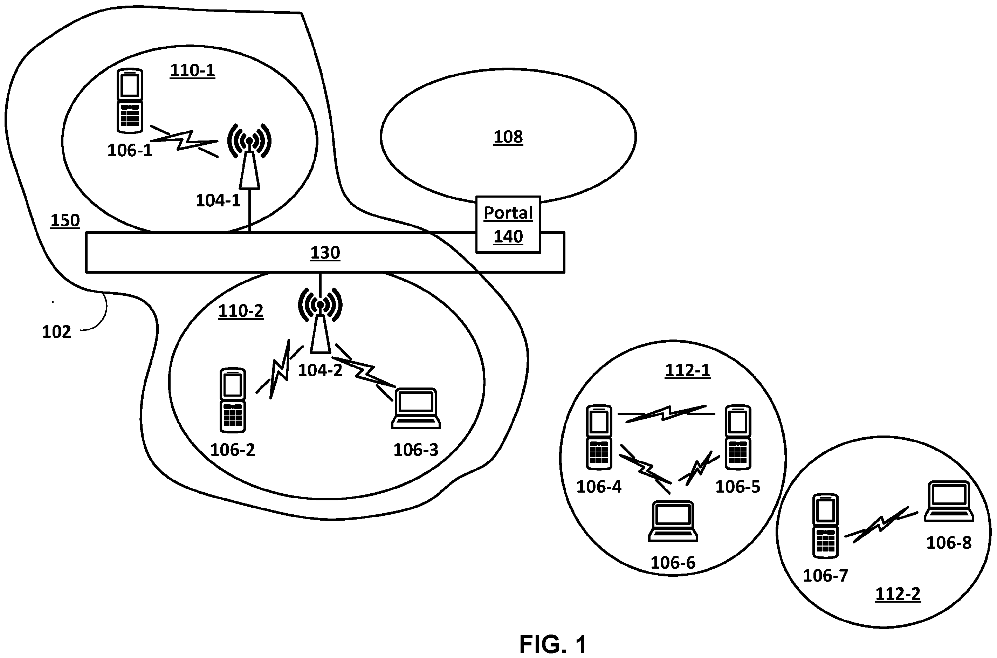

FIG. 1 shows example wireless communication networks. The example wireless communication networks may be a wireless local area network (WLAN) 102. The WLAN 102 may comprise an Institute of Electrical and Electronic Engineers (IEEE) 802.11 infra-structure network, or any other type of communication network. The WLAN 102 may comprise one or more basic service sets (BSSs) 110-1 and 110-2. BSSs 110-1 and 110-2 may each include a set of an access point (AP or AP station (STA)) and at least one station (STA or non-AP STA). For example, BSS 110-1 includes an AP 104-1 and a STA 106-1, and BSS 110-2 includes an AP 104-2 and STAs 106-2 and 106-3. The AP and the at least one STA in a BSS may be configured to perform an association procedure to communicate with each other.

The WLAN 102 may comprise a distribution system (DS) 130. DS 130 may be configured to connect BSS 110-1 and BSS 110-2. DS 130 may enable an extended service set (ESS) 150 by being configured to connect BSS 110-1 and BSS 110-2. The ESS 150 may be a network comprising one or more Aps (e.g., Aps 104-1 and AP 104-2) that may be connected via the DS 130. The APs included in ESS 150 may have the same service set identification (SSID). WLAN 102 may be coupled to one or more external networks. For example, WLAN 102 may be connected to another network 108 (e.g., 802.X) via a portal 140. Portal 140 may function as a bridge connecting DS 130 of WLAN 102 with the other network 108.

The example wireless communication networks shown in FIG. 1 may further include one or more ad-hoc networks or independent BSSs (IBSSs). An ad-hoc network or IBSS may be a network that includes a plurality of STAs that are within communication range of each other. The plurality of STAs may be configured so that the plurality of STAs may communicate with each other using direct peer-to-peer communication (i.e., not via an AP).

For example, STAs 106-4, 106-5, and 106-6, in FIG. 1, may be configured to form a first IBSS 112-1. STAs 106-7 and 106-8 may be configured to form a second IBSS 112-2. An IBSS may not include a centralized management entity. The IBSS may not include a centralized management entity, for example, if an IBSS does not include an AP. STAs within an IBSS may be managed in a distributed manner. STAs forming an IBSS may be fixed or mobile.

A STA as a predetermined functional medium may include a medium access control (MAC) layer that complies with an IEEE 802.11 standard. A physical layer interface for a radio medium may be used among the APs and the non-AP stations (STAs). The STA may also be referred to using various other terms, including mobile terminal, wireless device, wireless transmit/receive unit (WTRU), user equipment (UE), mobile station (MS), mobile subscriber unit, or user. For example, the term "user" may be used to denote a STA participating in uplink Multi-user Multiple Input, Multiple Output (MU MIMO) and/or uplink Orthogonal Frequency Division Multiple Access (OFDMA) transmission.

A physical layer (PHY) protocol data unit (PPDU) may be a composite structure that includes a PHY preamble and a payload in the form of a PHY service data unit (PSDU). For example, the PSDU may include a PHY preamble and header and/or one or more MAC protocol data units (MPDUs). The information provided in the PHY preamble may be used by a receiving device to decode the subsequent data in the PSDU. The preamble fields may be duplicated and sent (e.g., transmitted) in each of the multiple component channels, in instances in which PPDUs are sent (e.g., transmitted) over a bonded channel (channel formed through channel bonding). The PHY preamble may include both a legacy portion (or "legacy preamble") and a non-legacy portion (or "non-legacy preamble"). The legacy preamble may be used for packet detection, automatic gain control and channel estimation, among other uses. The legacy preamble also may generally be used to maintain compatibility with legacy devices. The information provided in, and the format and coding of the non-legacy portion of the preamble may be based on the particular IEEE 802.11 protocol to be used to send (e.g., transmit) the payload.

A frequency band may include one or more sub-bands or frequency channels. For example, PPDUs conforming to the IEEE 802.11n, 802.11ac, 802.11ax and/or 802.11be standard amendments may be sent (e.g., transmitted) over the 2.4 GHz, 5 GHz, and/or 6 GHz bands, each of which may be divided into multiple 20 MHz channels. The PPDUs may be sent (e.g., transmitted) over a physical channel having a minimum bandwidth of 20 MHz. Larger channels may be optionally formed through channel bonding of a primary 20 MHz channel and one or more 20 MHz secondary channels. PPDUs may be sent (e.g., transmitted) over physical channels having bandwidths of 40 MHz, 80 MHz, 160 MHz, or 320 MHz by bonding together a primary 20 MHz channel and 1, 3, 7, or 15 secondary channel respectively. The primary channel may be a common channel operation for all STAs where management frames may be sent by the AP to ensure that all STAs (regardless of channel bonding support) can receive.

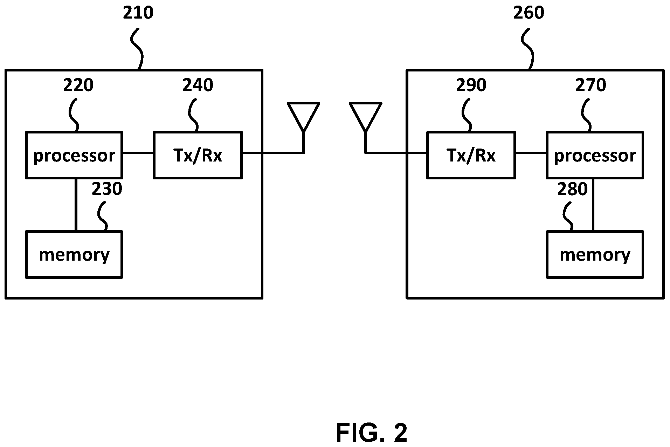

FIG. 2 is a block diagram showing example implementations of a STA 210 and an AP 260. STA 210, as shown in FIG. 2, may include at least one processor 220, a memory 230, and at least one transceiver 240. AP 260 may include at least one processor 270, a memory 280, and at least one transceiver 290. Processor 220/270 may be operatively connected to memory 230/280 and/or to transceiver 240/290.

Processor 220/270 may implement functions of the PHY layer, the MAC layer, and/or the logical link control (LLC) layer of the corresponding device (STA 210 or AP 260). Processor 220/270 may include one or more processors and/or one or more controllers. The one or more processors and/or one or more controllers may comprise, for example, a general-purpose processor, a digital signal processor (DSP), a microcontroller, an application specific integrated circuit (ASIC), a field programmable gate array (FPGA), a logic circuit, or a chipset.

Memory 230/280 may include a read-only memory (ROM), a random-access memory (RAM), a flash memory, a memory card, a storage medium, and/or other storage unit. Memory 230/280 may comprise one or more non-transitory computer readable mediums. Memory 230/280 may store computer program instructions or code that may be executed by processor 220/270 to carry out one or more of the operations discussed in the present application. Memory 230/280 may be implemented (or positioned) within processor 220/270 or external to processor 220/270. Memory 230/280 may be operatively connected to processor 220/270 via various means known in the art.

Transceiver 240/290 may be configured to send/transmit/receive radio signals. The transceiver 240/290 may implement a PHY layer of the corresponding device (STA 210 or AP 260). STA 210 and/or AP 260 may be a multi-link device (MLD), that is a device capable of operating over multiple links as defined by the IEEE 802.11 standard. STA 210 and/or AP 260 may each implement multiple PHY layers. The multiple PHY layers may be implemented using one or more of transceivers 240/290.

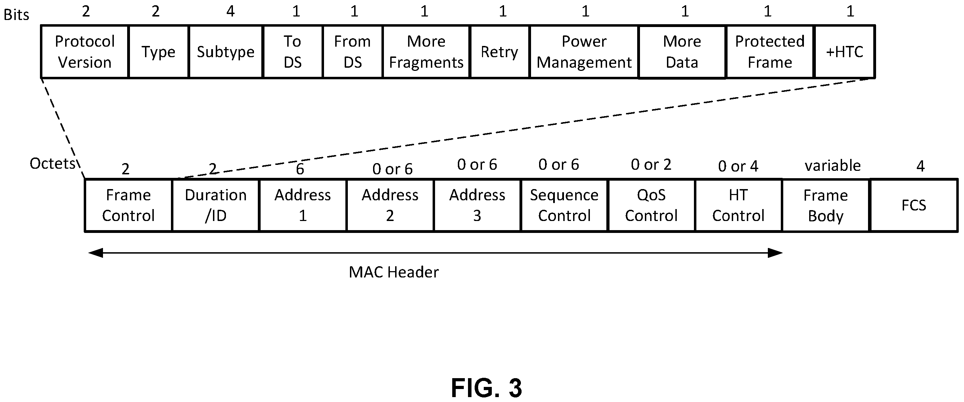

FIG. 3 shows an example format of a MAC frame. A STA in operation may construct a subset of MAC frames for transmission and may decode a subset of received MAC frames upon validation. The particular subsets of frames that a STA may construct and/or decode may be determined by the functions supported by the STA. A STA may validate a received MAC frame using the frame check sequence (FCS) contained in the frame and may interpret certain fields from the MAC headers of all frames.

As shown in FIG. 3, a MAC frame may include a MAC header, a variable length frame body, and a frame check sequence (FCS). The MAC header may include a frame control field, an optional duration/ID field, address fields, an optional sequence control field, an optional QoS control field, and an optional HT control field. The frame control field may include the following subfields: protocol version, type, subtype, "To DS", "From DS", "More Fragments", retry, power management, "More Data", protected frame, and +HTC (high throughput control). The protocol version subfield may be invariant in size and placement across all revisions of the IEEE 802.11 standard. The value of the protocol version subfield may be 0 for MAC frames.

The type and subtype subfields together may identify the function of the MAC frame. There may be three frame types: control, data, and management. Each of the frame types may have several defined subtypes. Bits within the subtype subfield may be used to indicate a specific modification of the basic data frame (subtype 0). For example, in data frames, the most significant bit (MSB) of the subtype subfield, bit 7 (B7) of the frame control field, may be defined as the QoS subfield. A QoS data frame may be indicated, which is a data frame that contains a QoS control field in its MAC header, if the QoS subfield is set to 1. The second MSB of the subtype field, bit 6 (B6) of the frame control field, if set to 1 in data subtypes, indicates a data frame that contain no frame body field.

The "To DS" subfield may indicate whether a data frame is destined to the distribution system (DS). The "From DS" subfield may indicate whether a data frame originates from the DS.

The "More Fragments" subfield may be set to 1 in all data or management frames that have another fragment to follow the MAC service data unit (MSDU) or MAC management protocol data unit (MMPDU) carried by the MAC frame. The "More Fragments" subfield may be set to 0 in all other frames in which the "More Fragments" subfield is present.

The retry subfield may be set to 1 in any data or management frame that is a retransmission of an earlier frame. It may be set to 0 in all other frames in which the retry subfield is present. A receiving STA may use this indication to aid it in the process of eliminating duplicate frames. These rules may not apply for frames sent by a STA under a block agreement. The power management subfield may be used to indicate the power management mode of a STA.

The "More Data" subfield may indicate to a STA in power save (PS) mode that bufferable units (BUs) are buffered for that STA at the AP. The "More Data" subfield may be valid in individually addressed data or management frames sent (e.g., transmitted) by an AP to a STA in PS mode. The "More Data" subfield may be set to 1 to indicate that at least one additional buffered BU is present for the STA.

The protected frame subfield may be set to 1 if the frame body field contains information that has been processed by a cryptographic encapsulation algorithm. The +HTC subfield may indicate that the MAC frame contains an HT control field.

The duration/ID field of the MAC header may indicate various contents depending on the frame type and subtype and the QoS capabilities of the sending STA. For example, the duration/ID field, in control frames of the power save poll (PS-Poll) subtype, may carry an association identifier (AID) of the STA that sent (e.g., transmitted) the frame in the 14 least significant bits (LSB), with the 2 most significant bits (MSB) set to 1. The duration/ID field, in other frames sent by STAs, may contain a duration value (in microseconds) which is used by a recipient to update a network allocation vector (NAV). The NAV may be a counter that indicates to a STA an amount of time during which the STA must defer from accessing the shared medium.

Up to four address fields may be present in the MAC frame format. The address fields may be used to indicate the basic service set identifier (BSSID), source address (SA), destination address (DA), transmitting address (TA), and receiving address (RA). Certain frames may not contain some of the address fields. Certain address field usage may be specified by the relative position of the address field (1-4) within the MAC header, independent of the type of address present in that field. The address 1 field may identify the intended receiver(s) of the frame, and the address 2 field, where present, may identify the transmitter of the frame.

The sequence control field may include two subfields, a sequence number subfield and a fragment number subfield. The sequence number subfield in data frames may indicate the sequence number of the MSDU (if not in an Aggregated MSDU (A-MSDU)) or A-MSDU. The sequence number subfield in management frames may indicate the sequence number of the frame. The fragment number subfield may indicate the number of each fragment of an MSDU or MMPDU. The fragment number may be set to 0 in the first or only fragment of an MSDU or MMPDU and may be incremented by one for each successive fragment of that MSDU or MMPDU. The fragment number may be set to 0 in a MAC protocol data unit (MPDU) containing an A-MSDU, or in an MPDU containing an MSDU or MMPDU that is not fragmented. The fragment number may remain constant in all retransmissions of the fragment.

The QoS control field may identify the traffic category (TC) or traffic stream (TS) to which the MAC frame belongs. The QoS control field may also indicate various other QoS related, A-MSDU related, and mesh-related information about the frame. This information may vary by frame type, frame subtype, and type of transmitting STA. The QoS control field may be present in all data frames in which the QoS subfield of the subtype subfield is equal to 1.

The HT control field may be present in QoS data, QoS null, and management frames as determined by the +HTC subfield of the frame control field. The frame body field may be a variable length field that contains information specific to individual frame types and subtypes. The frame body may include one or more MSDUs or MMPDUs. The minimum length of the frame body may be 0 octets.

The FCS field may contain a 32-bit Cyclic Redundancy Check (CRC) code. The FCS field value may be calculated over all of the fields of the MAC header and the frame body field.

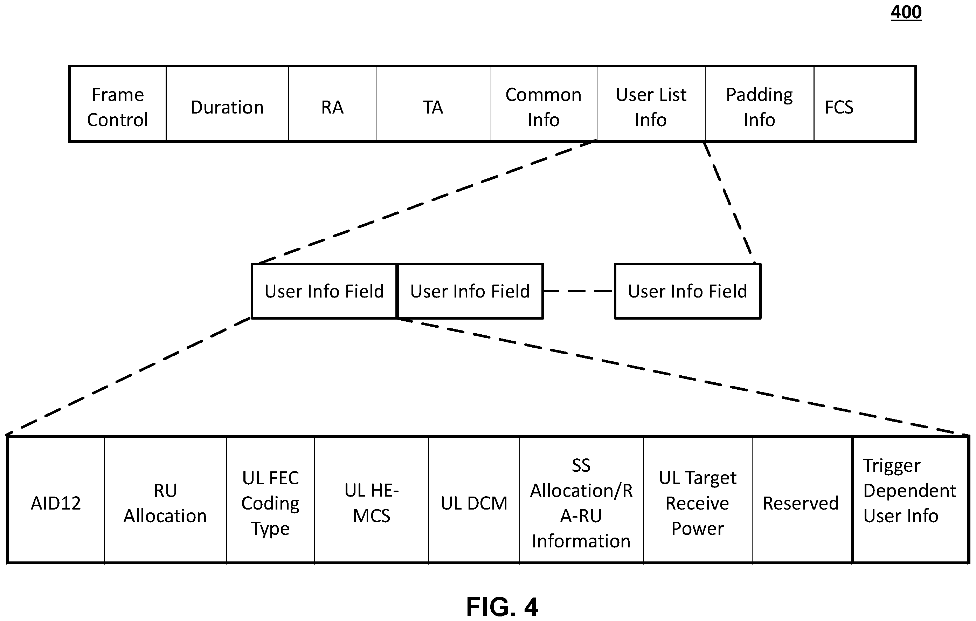

FIG. 4 shows an example trigger frame 400. Trigger frame 400 may correspond to a basic trigger frame as defined in the at least some IEEE 802.11ax standard amendment. Trigger frame 400 may be used by an AP to allocate resources for and solicit one or more TB PPDU transmissions from one or more STAs. Trigger frame 400 may also carry other information required by a responding STA to send (e.g., transmit) a TB PPDU to the AP.

Trigger frame 400, as shown in FIG. 4, may include a Frame Control field, a Duration field, a receiver address (RA) field, a transmitter address (TA) field, a Common Info field, a User List Info field, a Padding field, and an FCS field. The Frame Control field may include the following subfields: protocol version, type, subtype, To DS, From DS, more fragments, retry, power management, more data, protected frame, and +HTC.

The Duration field may indicate various contents depending on frame type and subtype and the QoS capabilities of the sending STA. For example, the Duration field, in control frames of the power save poll (PS-Poll) subtype, may carry an association identifier (AID) of the STA that sent (e.g., transmitted) the frame in the 14 least significant bits (LSB), and the 2 most significant bits (MSB) are both set to 1. The Duration field, in other frames sent by STAs, may contain a duration value (in microseconds) which is used by a recipient to update a network allocation vector (NAV).

The RA field may be the address of the STA that is intended to receive the incoming transmission from the transmitting station. The TA field may be the address of the STA sending (e.g., transmitting) trigger frame 400 if trigger frame 400 is addressed to STAs that belong to a single BSS. The TA field may be the sent (e.g., transmitted) BSSID if the trigger frame 400 is addressed to STAs from at least two different BSSs of the multiple BSSID set.

The common info field may have a format as shown by common info field 600 described further below. The common info field may specify a trigger frame type of trigger frame 400, a transmit power of trigger frame 400 in dBm, and several key parameters of a TB PPDU that is sent (e.g., transmitted) by a STA in response to trigger frame 400. The trigger frame type of a trigger frame used by an AP to receive QoS data using UL MU operation may be referred to as a basic trigger frame.

The User List Info field may contain a User Info field per STA addressed in trigger frame 400. The per STA User Info field may include, among others, an AID subfield, an RU Allocation subfield, a Spatial Stream (SS) Allocation subfield, an MCS subfield to be used by a STA in a TB PPDU sent (e.g., transmitted). The per STA User Info field may include, among others, an AID subfield, an RU Allocation subfield, a Spatial Stream (SS) Allocation subfield, an MCS subfield to be used by a STA in a TB PPDU sent (e.g., transmitted), based on (e.g., in response to) trigger frame 400, and a Trigger Dependent User Info subfield. The Trigger Dependent User Info subfield may be used by an AP to specify a preferred access category (AC) per STA. The preferred AC may set the minimum priority AC traffic that can be sent by a participating STA. The AP may determine the list of participating STAs, along with the BW, MCS, RU allocation, SS allocation, Tx power, preferred AC, and maximum duration of the TB PPDU per participating STA.

The Padding field may be optionally present in trigger frame 400 to extend the frame length to give recipient STAs enough time to prepare a response for transmission one SIFS (short interframe spacing) after the frame is received. The Padding field, if present, may be at least two octets in length and may be set to all 1s. The FCS field may be used by a STA to validate a received frame and to interpret certain fields from the MAC headers of a frame.

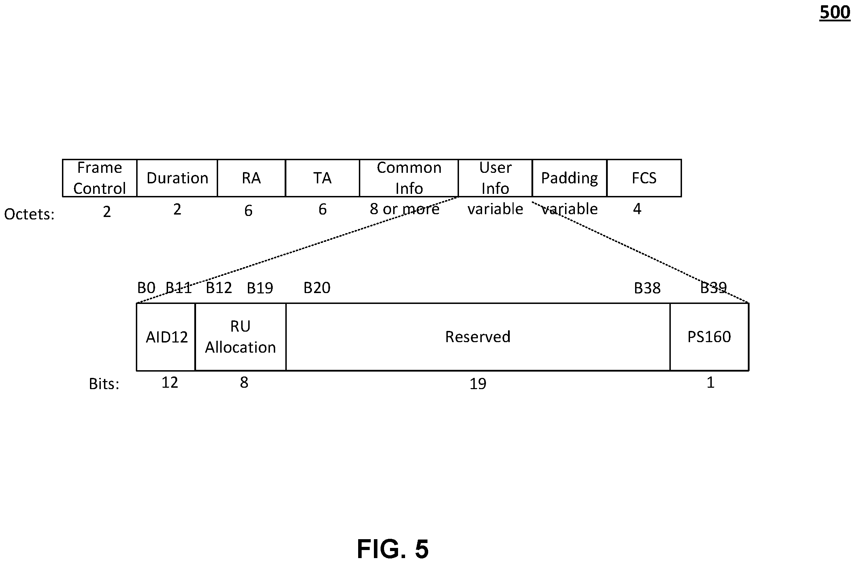

FIG. 5 shows an example multi-user request to send (MU-RTS) trigger frame 500. MU-RTS trigger frame 500 may be used by an AP to solicit simultaneous CTS frames from multiple STAs to send (e.g., transmit) a downlink (DL) MU PPDU to the multiple STAs. MU-RTS trigger frame 500, as shown in FIG. 5, may comprise a frame control field, a duration field, an RA field, a TA field, a common info field, one or more user info fields, a padding field, and an FCS field. The frame control, TA, RA, padding, and FCS fields may be similar to the corresponding fields of trigger frame 400 described above. The common info field may have a format as shown by common info field 600 described further below. The duration field may be set to the time, in microseconds, required to send (e.g., transmit) the DL MU PPDU, plus the time required to send (e.g., transmit) one CTS frame, one ACK frame (if required), and three SIFS periods.

The one or more user info fields may correspond respectively to the one or more STAs solicited by MU-RTS trigger frame 500. A user info field, as shown in FIG. 5, may comprise an AID12 subfield, an RU allocation subfield, reserved bits, and a PS 160 subfield. The AID12 subfield may comprise an association identifier of the STA to which the user info field is addressed. The RU allocation subfield may indicate a channel on which the solicited STA is to send (e.g., transmit) the CTS frame. The channel may include a primary 20 MHz channel, a primary 40 MHz, a primary 80 MHz channel, a primary 160 MHz, an 80+80 Mhz channel, or a 320 MHz channel.

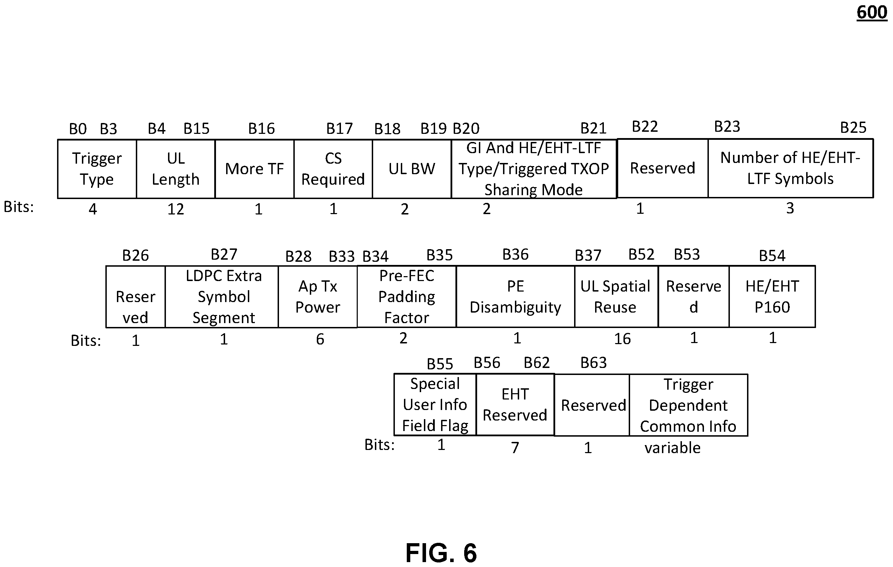

FIG. 6 shows an example Common Info field 600. Common Info field 600 may be the Common Info field of trigger frame 400 or MU-RTS trigger frame 500. Common Info field 600, as shown in FIG. 6, may include a Trigger Type subfield, a UL Length subfield, a More TF subfield, a CS required subfield, a UL BW subfield, a GI and HE/EHT-LTF Type/Triggered TXS Mode subfield, a first Reserved subfield, a Number of HE/EHT-LTF Symbols subfield, a second Reserved subfield, an LDPC Extra Symbol Segment subfield, an AP Tx Power subfield, a Pre-FEC Padding Factor subfield, a PE Disambiguity subfield, an UL Spatial Reuse subfield, a third Reserved subfield, a HE/EHT P160 subfield, a Special User Info Field Flag subfield, an EHT Reserved subfield, a fourth Reserved subfield, and a Trigger Dependent Common Info subfield. The Trigger Type subfield, UL Length subfield, More TF subfield, CS required subfield, UL BW subfield, GI and HE-LTF Type/Triggered TXS Mode subfield, first Reserved subfield, Number of HE/EHT-LTF Symbols subfield, second Reserved subfield, LDPC Extra Symbol Segment subfield, AP Tx Power subfield, Pre-FEC Padding Factor subfield, PE Disambiguity subfield, UL Spatial Reuse subfield, third Reserved subfield, HE/EHT P160 subfield, Special User Info Field Flag subfield, EHT Reserved subfield, fourth Reserved subfield, and Trigger Dependent Common Info subfield may have the same content and interpretation as corresponding subfields of an EHT variant Common Info field defined in the IEEE 802.11be draft amendment ("IEEE P802.11be/D3.1, March 2023").

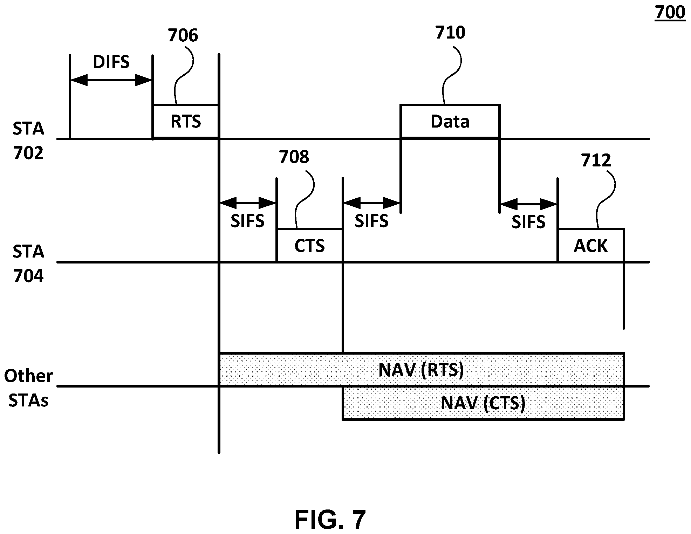

FIG. 7 shows an example 700 of a Request-to-Send (RTS)/Clear-to-Send (CTS) procedure. Example 700 may be an example according to the RTS/CTS procedure as defined in section 10.3.2.9 of the IEEE 802.11 standard draft "IEEE P802.11-REVme^{™}/D3.0, April 2023." As shown in FIG. 7, example 700 may include STAs 702 and 704. Other STAs of the same BSS may also be within communication range of STAs 702 and 704.

STA 702 may send (e.g., transmit) an RTS frame 706 to STA 704. STA 702 may send (e.g., transmit) RTS frame 706 to protect from hidden STA(s) the transmission of a data frame 710 that STA 702 intends to send (e.g., transmit). RTS frame 706 may include a Duration/ID field. The Duration/ID field may be set to the time, in microseconds, required to send (e.g., transmit) data frame 710, plus one CTS frame, plus one ACK frame (if required), plus three SIFS (Short Interframe Spacing) periods.

STA 704 may respond to RTS frame 706 by sending (e.g., transmitting) a CTS frame 708 to STA 702. CTS frame 708 may be sent (e.g., transmitted) one SIFS period after RTS frame 706. STA 704 may respond to RTS frame 706 if RTS frame 706 is addressed to STA 704 and after considering the NAV, unless the NAV was set by a frame originating from STA 702. STA 704 may respond to the RTS frame 706 if RTS frame 706 is addressed to STA 704 and if the NAV indicates idle. The NAV, for a non-S1G STA, may indicate idle if the NAV count is 0 or if the NAV count is non-zero and a nonbandwidth signaling TA obtained from a TA field of RTS frame 706 matches a saved TXOP holder address. The NAV, For an S1G STA, may indicate idle if both the NAV and RID (response indication deferral) counters are 0 or if either the NAV or RID counter is non-zero and the TA field of RTS frame 706 matches the saved TXOP holder address.

STA 704 may set an RA field of CTS frame 708 to a nonbandwidth signaling TA obtained from the TA field of RTS frame 706. STA 704 may set a Duration field of CTS frame 708 based on the Duration/ID field of RTS frame 706, namely as equal to the value of the Duration/ID field of RTS frame 706, adjusted by subtracting the time required to send (e.g., transmit) CTS frame 708 and one SIFS period.

STA 702, upon receiving CTS frame 708, may wait one SIFS period before sending (e.g., transmitting) data frame 710. STA 704 may send (e.g., transmit) an ACK frame 712. STA 704 may send (e.g., transmit) an ACK frame 712 based on (e.g., in response to) data frame 710. STA 704 may send (e.g., transmit) ACK frame 712 one SIFS after receiving data frame 710.

Other STAs within communication range of STAs 702 and 704, and belonging to the same BSS, may set their NAVs according to RTS frame 706 and/or CTS frame 708. For example, a STA receiving RTS frame 706 may set its NAV based on the Duration/ID field of RTS frame 706. Another STA receiving CTS frame 708 may set its NAV based on the Duration field of CTS frame 708. The other STAs may not access the channel using EDCA until the end of transmission of ACK frame 712.

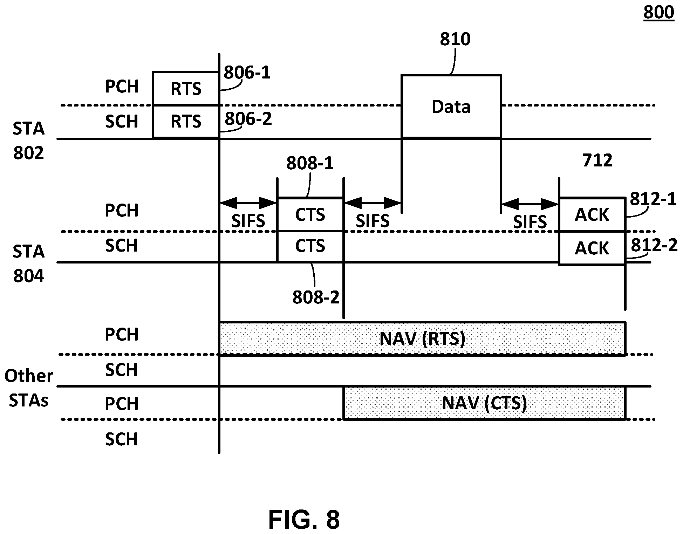

FIG. 8 shows an example 800 of a wideband RTS/CTS procedure. Example 800 as shown in FIG. 8 may include STAs 802 and 804. Other STAs may also be within communication range of STAs 802 and 804. STAs 802 and 804 may each operate on a primary channel (PCH) and a secondary channel (SCH). For example, without limitation, the PCH may correspond to a primary 20 MHz channel and the SCH may correspond to a secondary 20 MHz channel.

Example 800 may begin with STA 802 accessing both the PCH and SCH to send (e.g., transmit) simultaneously RTS frames 806-1 and 806-2 on the PCH and the SCH, respectively, to STA 804. RTS frames 806-1 and 806-2 may be sent (e.g., transmitted) in a non-HT duplicate PPDU having a bandwidth equal to the combined bandwidth of the PCH and the SCH (e.g., 40 MHz). STA 802 may check a NAV associated with the PCH before sending (e.g., transmitting) RTS frames 806-1 and 806-2. STA 802 may perform a clear channel assessment (CCA) on the PCH and the SCH . STA 802 may perform a clear channel assessment (CCA) on the PCH and the SCH, for example, if the NAV associated with the PCH indicates that the PCH is idle. The CCA may include determining whether a received signal energy on a channel exceeds an energy detect (ED) threshold. The CCA may return a "channel busy" condition or a "channel idle" condition. The CCA may return a "channel busy" condition, for example, if the received signal energy on the channel exceeds the ED threshold. The CCA may return a "channel idle" condition if the received signal energy on the channel is below the ED threshold. STA 802 may access both the PCH and the SCH to send (e.g., transmit) RTS frames 806-1 and 806-2. STA 802 may access both the PCH and the SCH to send (e.g., transmit) RTS frames 806-1 and 806-2, for example, if the CCA indicates "channel idle" on both the PCH and the SCH.

RTS frames 806-1 and 806-2 may be duplicate frames. RTS frames 806-1 and 806-2 may include a duration field indicating the time, in microseconds, required to send (e.g., transmit) a data frame 810, plus one CTS frame, plus one Ack frame, plus three SIFSs.

other STAs within the communication range of STA 802, on receiving RTS frames 806-1 and 806-2, may set a NAV associated with the PCH based on RTS frame 806-1. The other STAs may not maintain a NAV for the SCH.

STA 804, on receiving RTS frames 806-1 and 806-2, may respond to STA 802 by sending (e.g., transmitting) CTS frames 808-1 and 808-2 on the PCH and the SCH respectively. CTS frames 808-1 and 808-2 may be sent (e.g., transmitted) a SIFS after STA 804 receives RTS frames 806-1 and 806-2 respectively. STA 804 may send (e.g., transmit) CTS frames 808-1 and 808-2 on the PCH and the SCH respectively based on a NAV associated with the PCH indicating that the PCH is idle. STA 804 may not maintain a NAV for the SCH or may not check a NAV associated with the SCH before sending (e.g., transmitting) CTS frames 808-1 and 808-2.

Other STAs within the communication range of STA 804, after receiving CTS frames 808-1 and 808-2, may set a NAV associated with the PCH based on CTS frame 808-1. The other STAs may not maintain a NAV for the SCH.

STA 802, after receiving CTS frames 808-1 and 808-2, may proceed to send (e.g., transmit) data frame 810 on both the PCH and the SCH. Data frame 810 may be sent (e.g., transmitted) a SIFS after STA 802 receives CTS frames 808-1 and 808-2. STA 802 may proceed to send (e.g., transmit) data frame 810 on both the PCH and the SCH on the sole condition of receiving CTS frame 808-1 on the PCH. STA 802 may not be required to receive CTS frame 808-2 on the SCH to send (e.g., transmit) data frame 810 on the SCH as well as the PCH.

STA 804 may acknowledge data frame 810 by sending (e.g., transmitting) ACK frames 812-1 and 812-2 on the PCH and the SCH, respectively. ACK frames 812-1 and 812-2 may be sent (e.g., transmitted) a SIFS after STA 804 receives data frame 810.

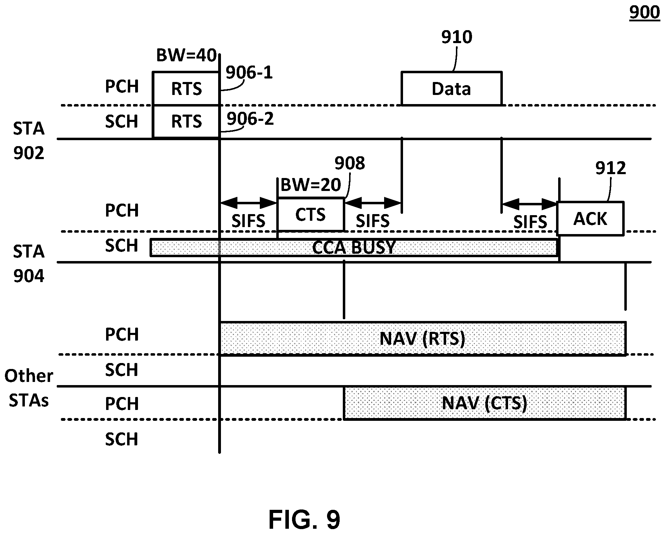

FIG. 9 shows an example 900 of a wideband RTS/CTS procedure that uses a bandwidth signaling RTS frame. Example 900, as shown in FIG. 9, may include STAs 902 and 904. Other STAs may also be within communication range of STAs 902 and 904. STAs 902 and 904 may each operate on a primary channel (PCH) and a secondary channel (SCH). For example, without limitation, the PCH may correspond to a primary 20 MHz channel and the SCH may correspond to a secondary 20 MHz channel.

Example 900 may begin with STA 902 accessing both the PCH and SCH to send (e.g., transmit) simultaneously RTS frames 906-1 and 906-2 on the PCH and the SCH, respectively, to STA 904. RTS frames 906-1 and 906-2 may be sent (e.g., transmitted) in a non-HT duplicate PPDU having a bandwidth equal to the combined bandwidth of the PCH and the SCH (e.g., 40 MHz). STA 902 may check a NAV associated with the PCH. STA 902 may check a NAV associated with the PCH, for example, before sending (e.g., transmitting) RTS frames 906-1 and 906-2. STA 902 may perform a CCA on the PCH and the SCH. STA 902 may perform a CCA on the PCH and the SCH, for example, if the NAV associated with the PCH indicates that the PCH is idle. The CCA may include determining whether a received signal energy on a channel exceeds an ED threshold. The CCA may return a "channel busy" condition or a "channel idle" condition. The CCA may return a "channel busy" condition, for example, if the received signal energy on the channel exceeds the ED threshold. The CCA may return a "channel idle" condition, for example, if the received signal energy on the channel is below the ED threshold. STA 902 may access both the PCH and the SCH to send (e.g., transmit) RTS frames 906-1 and 906-2. STA 902 may access both the PCH and the SCH to send (e.g., transmit) RTS frames 906-1 and 906-2, for example, If the CCA indicates "channel idle" on both the PCH and the SCH.

RTS frames 906-1 and 906-2 may be duplicate frames. RTS frames 906-1 and 906-2 may include a duration field indicating the time, in microseconds, required to send (e.g., transmit) a data frame 910, plus one CTS frame, plus one Ack frame, plus three SIFSs.

RTS frames 906-1 and 906-2, in example 900, may be bandwidth signaling RTS frames. RTS frames 906-1 and 906-2 may each include a field that indicates the bandwidth of the PPDU (e.g., 40 MHz) carrying RTS frames 906-1 and 906-2.

Other STAs within the communication range of STA 902, on receiving RTS frames 906-1 and 906-2, may set a NAV associated with the PCH based on RTS frame 906-1. The other STAs may not maintain a NAV for the SCH.

STA 904, on receiving RTS frames 906-1 and 906-2, may decode the field indicating the bandwidth of the PPDU carrying RTS frames 906-1 and 906-2. The PPDU bandwidth may indicate to STA 904 that STA 902 wishes that STA 904 respond with CTS frames on both the PCH and the SCH. STA 904 may check a NAV associated with the PCH. STA 904 may check a NAV associated with the PCH, before responding to RTS frames 906-1 and 906-2. STA 904 may not maintain a NAV for the SCH or may not check a NAV associated with the SCH before responding to RTS frames 906-1 and 906-2. STA 904 may perform a CCA on the PCH and the SCH. STA 904 may perform a CCA on the PCH and the SCH, for example, if the NAV associated with the PCH indicates that the PCH is idle. STA 904 may respond on both the PCH and the SCH if the CCA indicates "channel idle" on both the PCH and the SCH. STA 904 may respond on the PCH only if the CCA indicates "channel idle" on the PCH and "channel busy" on the SCH. STA 904 may not respond on the PCH or the SCH if the NAV associated with the PCH is non-zero.

CCA, in example 900, may return "channel idle" on the PCH and "channel busy" on the SCH. STA 904 may send (e.g., transmit) a CTS frame 908 only on the PCH. CTS frame 908 may thus have a bandwidth that is narrower than the PPDU bandwidth indicated in RTS frames 906-1 and 906-2. CTS frame 908 may be sent (e.g., transmitted) a SIFS after STA 904 receives RTS frames 906-1 and 906-2 respectively.

Other STAs within the communication range of STA 904, on receiving CTS frame 908, may set a NAV associated with the PCH based on CTS frame 908. STA 902, on receiving CTS frame 908, may proceed to send (e.g., transmit) data frame 910 on the PCH. Data frame 910 may be sent (e.g., transmitted) a SIFS after STA 902 receives CTS frame 908. STA 904 may acknowledge data frame 910 by sending (e.g., transmitting) an ACK frame 912 on the PCH. ACK frame 912 may be sent (e.g., transmitted) a SIFS after STA 904 receives data frame 910.

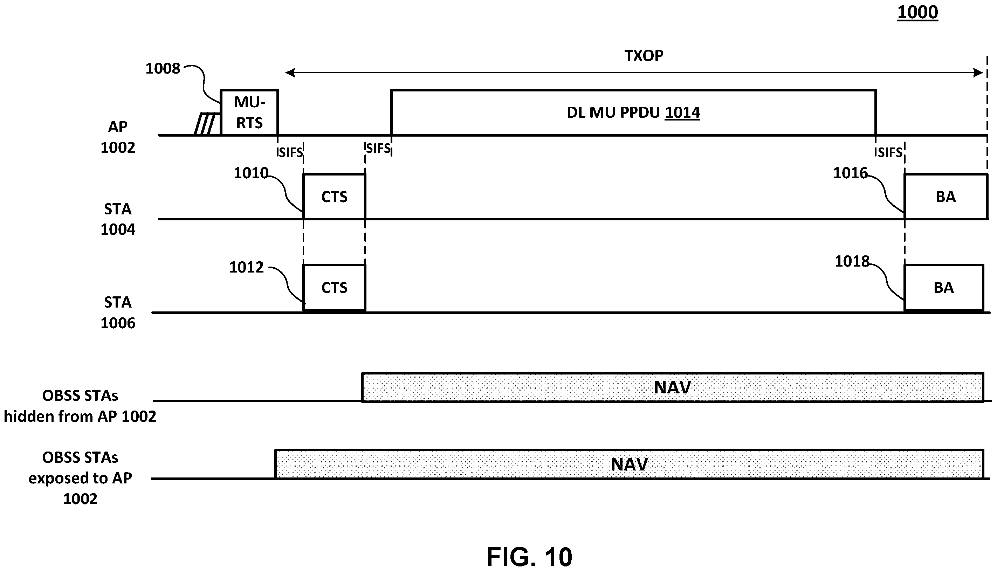

FIG. 10 is an example 1000 that shows a multi-user Request-to-Send (MU-RTS)/Clear-to-Send (CTS) procedure. Example 1000 may be an example according to the MU-RTS/CTS procedure as defined in section 26.2.6 of the IEEE 802.11 standard draft ("IEEE P802.11-REVme^{™}/D3.0, April 2023"). Example 1000, as shown in FIG. 10, may include an AP 1002 and STAs 1004 and 1006. STAs 1004 and 1006 may be associated with AP 1002. Example 1000 shows STAs of an overlapping basic service set (OBSS) relative to the BSS of AP 1002 (OBSS STAs). The OBSS STAs, as shown in FIG. 10, may be hidden from AP 1002 (outside of the communication range of AP 1002) or exposed to AP 1002 (within the communication range of AP 1002).

AP 1002 in example 1000 may wish to send (e.g., transmit) a downlink (DL) multi-user (MU) PPDU 1014 to STAs 1004 and 1006. DL MU PPDU 1014 may comprise data for each of STAs 1004 and 1006. DL MU PPDU 1014 may occupy a plurality of channels (e.g., 20 MHz channels). Each channel of the plurality of channels may carry the data for a respective STA (e.g., STA 1004, STA 1006) served by DL MU PPDU 1014.

AP 1002, as shown in FIG. 10, may use the MU-RTS/CTS procedure to initiate a TXOP, to protect the TXOP frame exchange sequence and to protect the transmission of DL MU PPDU 1014 to STAs 1004 and 1006 from interference by OBSS STAs hidden from AP 1002. AP 1002 may initiate the TXOP by sending (e.g., transmitting) an MU-RTS trigger frame 1008 that solicits simultaneous CTS frame transmissions from STAs 1004 and 1006.

MU-RTS trigger frame 1008 may have a format as shown by MU-RTS trigger frame 500 shown in FIG. 5. MU-RTS trigger frame 1008 may comprise a frame control field, a duration field, an RA field, a TA field, a common info field, one or more user info fields, a padding field, and an FCS field. The duration field may be set to the time, in microseconds, required to send (e.g., transmit) DL MU PPDU 1014, plus the time required to send (e.g., transmit) one CTS frame, one ACK frame (if required), and three SIFS periods.

The one or more user info fields correspond respectively to the one or more STAs solicited by the MU-RTS trigger frame. In example 1000, MU-RTS trigger frame 1008 may comprise a user info field for each of STAs 1004 and 1006 indicating that a CTS frame is solicited from each of STAs 1004 and 1006. As shown in FIG. 8, a user info field may comprise an AID12 subfield, an RU allocation subfield, reserved bits, and a PS 160 subfield. The AID12 subfield comprises an association identifier of the STA to which the user info field is addressed. The RU allocation subfield indicates a channel on which the solicited STA is to send (e.g., transmit) the CTS frame. In an example, this may include a primary 20 MHz channel, a primary 40 MHz, a primary 80 MHz channel, a primary 160 MHz, an 80+80 Mhz channel, or a 320 MHz channel.

AP 1002 may send MU-RTS trigger frame 1008 in a PPDU that occupies one or more channels (e.g., 20 MHz channels). AP 1002, for each channel occupied by the PPDU that carries MU-RTS trigger frame 1008, may request at least one non-AP STA to send a CTS frame that occupies that channel. AP 1002 may not request that a non-AP STA send a CTS frame that occupies a channel that is not occupied by the PPDU carrying MU-RTS trigger frame 1008.

AP 1002 may wait for a CTSTimeout interval of aSIFSTime + aSlotTime + aRxPHYStartDelay. AP 1002 may wait for a CTSTimeout interval of aSIFSTime + aSlotTime + aRxPHYStartDelay, for example, if AP1002 sends (e.g., transmitting) MU-RTS trigger frame 1008 and a MAC layer of AP 1002 receives a PHYTXEND.confirm primitive for sent (e.g., transmitted) MU-RTS trigger frame 1008. AP 1002 may conclude that the transmission of MU-RTS trigger frame 1008 has failed. AP 1002 may conclude that the transmission of MU-RTS trigger frame 1008 has failed, for example, if the MAC layer does not receive a PHY-RXEARLYSIG.indication or a PHY-RXSTART.indication primitive during the CTSTimeout interval. AP 1002 may invoke its backoff procedure. AP 1002 may invoke its backoff procedure, for example, if MU-RTS trigger frame 1008 initiated a TXOP. The MAC layer may wait for the corresponding PHY-RXEND.indication primitive to determine whether transmission of MU-RTS trigger frame 1008 was successful. The MAC layer may wait for the corresponding PHY-RXEND.indication primitive to determine whether transmission of MU-RTS trigger frame 1008 was successful, for example, if the MAC layer receives a PHY-RXEARLYSIG.indication or a PHY-RXSTART.indication primitive during the CTSTimeout interval. The receipt of a CTS frame from any non-AP STA addressed by MU-RTS trigger frame 1008 before the PHY-RXEND.indication primitive may be interpreted as the successful transmission of MU-RTS trigger frame 1008, permitting the frame exchange sequence to continue. The receipt of any other type of frame may be interpreted as a failure of the transmission of MU-RTS trigger frame 1008. AP 1002 may process the received frame. AP 1002 shall invoke its backoff procedure at the PHY-RXEND.indication primitive. AP 1002 shall invoke its backoff procedure at the PHY-RXEND.indication primitive, for example, if MU-RTS trigger frame 1008 initiated a TXOP.

STAs 1004 and 1006, on receiving MU-RTS trigger frame 1008 in example 1000, may respond by sending (e.g., transmitting) respectively CTS frames 1010 and 1012 to AP 1002. STAs 1004 and 1006 may begin the transmission of CTS frames 1010 and 1012, respectively, at the SIFS time boundary after an end of a received PPDU comprising MU-RTS trigger frame 1008. STA 1004 (or STA 1006) may respond to MU-RTS trigger frame 1008 with a CTS frame. STA 1004 (or STA 1006) may respond to MU-RTS trigger frame 1008 with a CTS frame, for example if the following conditions are met: MU-RTS trigger frame 1008 comprises a user info field addressed to the STA (the AID12 subfield of the user info field is equal to the 12 LSBs of the AID of the STA) and MU-RTS trigger frame 1008 is sent by an AP with which the STA is associated; and the UL MU CS condition indicates that the medium is idle as described in section 26.5.2.5 (UL MU CS mechanism) of the IEEE 802.11 standard ("IEEE P802.11-REVme^{™}/D3.0, April 2023"). STA 1004 (or STA 1006) does not send a CTS frame to AP 1002, for example, if one of the conditions is not met.

STAs 1004 and 1006 may set an RA field of respectively CTS frames 1010 and 1012 to a TA obtained from the TA field of MU-RTS trigger frame 1008. STAs 1004 and 1006 may set a duration field of respectively CTS frames 1010 and 1012 based on the duration field of MU-RTS trigger frame 1008, namely as equal to the value of the duration field of MU-RTS trigger frame 1008, adjusted by subtracting the time required to send (e.g., transmit) respectively CTS frames 1010 and 1012 and one SIFS period.

OBSS STAs exposed to AP 1002 may receive MU-RTS trigger frame 1008 due to being within the communication range of AP 1002. OBSS STAs exposed to AP 1002, on receiving MU-RTS trigger frame 1008 as shown in FIG. 10, may set their respective NAVs based on the duration field of MU-RTS trigger frame 1008. The OBSS STAs exposed to AP 1002 may not access the wireless medium for the duration of the TXOP initiated by AP 1002.

OBSS STAs hidden from AP 1002 may not receive MU-RTS trigger frame 1008 due to being outside the communication range of AP 1002. Some of the OBSS STAs hidden from AP 1002, as shown in FIG. 10, may receive CTS frame 1010 and/or CTS frame 1012 and may set their respective NAVs based on the duration field of CTS frame 1010 and/or CTS frame 1012. Some of the OBSS STAs hidden from AP 1002 may also not access the wireless medium for the duration of the TXOP initiated by AP 1002.

AP 1002, on receiving CTS frame 1010 and/or CTS frame 1012, may wait one SIFS period before sending (e.g., transmitting) DL MU PPDU 1014. STAs 1004 and 1006, on receiving DL MU PPDU 1014, may respond by sending (e.g., transmitting) respective BlockAck (BA) frames 1016 and 1018 to AP 1002.

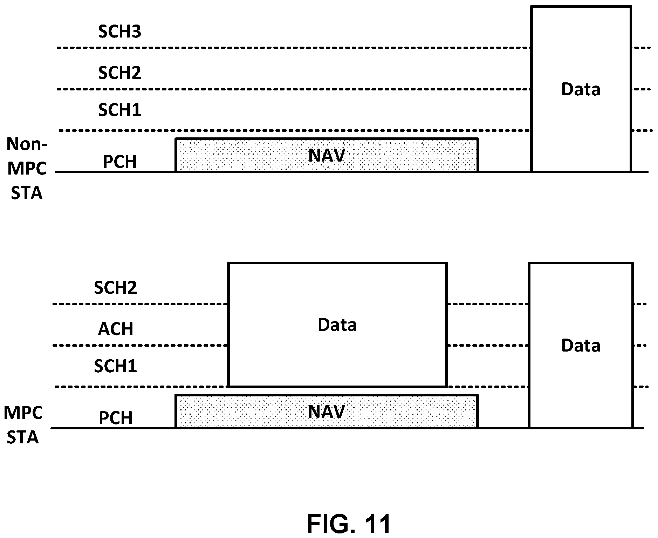

In at least some IEEE 802.11 standards, a STA may operate with multiple primary channels. Such a STA may be referred to as a multiple primary channel STA (MPC STA). An MPC STA may have one or more secondary channels considered as primary channels, in addition to a default primary channel (which is used by all STAs in the BSS). Hereinafter, the default primary channel may be referred to as "primary channel" and secondary channel(s) considered as primary channel(s) are referred to as anchor channel(s) (or auxiliary primary channel(s)). The MPC STA may send (e.g., transmit) or receive on a channel that includes such anchor channel(s) but that does not necessarily include the primary channel (e.g., if the primary channel is unavailable). An MPC STA may maintain a NAV for an anchor channel independent of the NAV associated with the primary channel. FIG. 11 is an example 1100 that shows a MPC STA operation mode. MPC STA operation may be contrasted with single primary channel STA (non-MPC STA) operation. The non-MPC STA, as shown in FIG. 11, may be capable of operating over a plurality of channels, including a primary channel (PCH), a first secondary channel (SCH1), a second secondary channel (SCH2), and a third secondary channel (SCH2). The channel corresponding to the second secondary channel (SCH2) of the non-MPC STA may correspond to an anchor channel (ACH) of the MPC STA, and the channel corresponding to the third secondary channel (SCH3) of the non-MPC STA may correspond to a second secondary channel (SCH2) of the MPC STA. The primary channel (PCH) and the first secondary channel (SCH1) of the non-MPC STA and the MPC STA may correspond to the same channels. Among these channels, the non-MPC STA may support a single primary channel (i.e., PCH), whereas the MPC STA supports two primary channels (PCH and ACH).

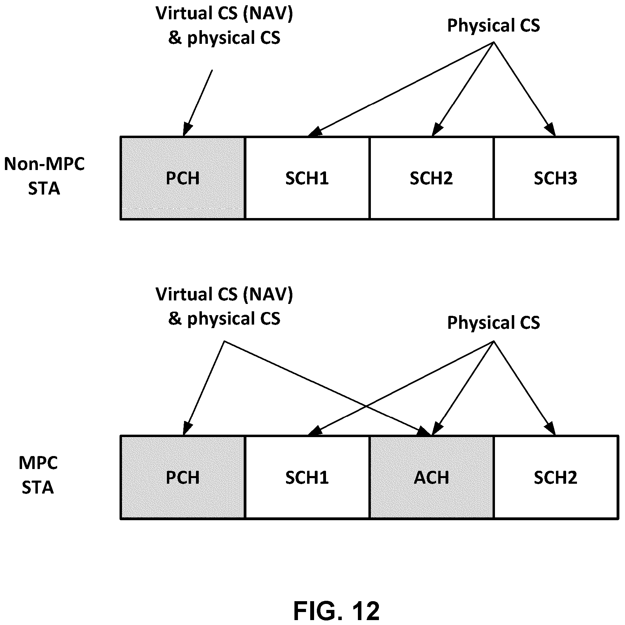

A virtual carrier sense (CS) function (e.g., NAV), in non-MPC STA operation as shown in FIG. 12, may be associated with only the PCH. Secondary channels may have only a physical CS function (e.g., energy detection) associated with them, which may be performed only if contending for transmission on the PCH. A non-MPC STA, as shown in FIG. 11, may only send (e.g., transmit) on a channel that includes the PCH (e.g., PCH, PCH+SCH1, PCH+SCH1+SCH2, PCH+SCH1+SCH2+SCH3), for example, if the NAV associated with the PCH is zero (and the physical CS function indicates "channel idle" for all channels being used).

A virtual CS function (e.g., NAV), in MPC STA operation as shown in FIG. 12, may be associated with multiple channels (e.g., PCH and ACH). An MPC STA, as shown in FIG. 11, may send (e.g., transmit) on channels that do not include the PCH but that include the ACH (e.g., ACH, ACH+SCH1, ACH+SCH2) if the NAV associated with the ACH is zero (and the physical CS indicates "channel idle" for all channels being used). An MPC STA may also send (e.g., transmit) on channels that do not include the PCH but that include the ACH (e.g., ACH, ACH+SCH1, ACH+SCH2) if the MPC STA detects that the ACH is idle using physical CS for at least a medium synchronization duration.

A MPC STA may perform physical and/or virtual CS functions (herein referred to as CS or CCA) on multiple channels (e.g., PCH and ACH). The MPC STA may use the ACH for transmission. The MPC STA may use the ACH for transmission, for example, if the PCH is busy (non-zero NAV or CCA indicates "channel busy") and if the ACH is idle (zero NAV and CCA indicates "channel idle").

An MPC STA may perform CS in parallel on multiple channels, including the PCH and the ACH. Such a STA may be referred to herein as a concurrent CCA MPC STA (such a STA may also be referred to as a concurrent CCA non-primary channel access (NPCA) STA or a Type 1 STA). A concurrent CCA MPC STA may be capable of medium synchronization simultaneously on multiple channels (e.g., PCH and ACH). A concurrent CCA MPC STA may be capable of medium synchronization simultaneously on multiple channels (e.g., PCH and ACH), for example, because of its concurrent CCA capability. Medium synchronization on a channel (e.g., PCH or ACH) may be performed by detecting a frame that includes NAV information or by listening to the channel for at least a medium synchronization duration and finding the channel idle throughout the medium synchronization duration. An MPC STA that does not support this capability may perform CS on a single channel at a time. An MPC STA may perform CS on the PCH by default. The STA may perform CS on the ACH. The STA may perform CS on the ACH, for example, if the PCH is found busy. Such a STA may be referred to herein as a non-concurrent CCA MPC STA (such a STA may also be referred to as a non-concurrent CCA MPCA STA or a Type 2 STA). A non-concurrent CCA MPC STA, comparing to the concurrent CCA MPC STA, may only synchronize to the ACH after the PCH is found busy. Hence, it may need to listen to the channel for at least a medium synchronization duration (if it does not receive any frame that includes NAV information) before it is able to send (e.g., transmit).

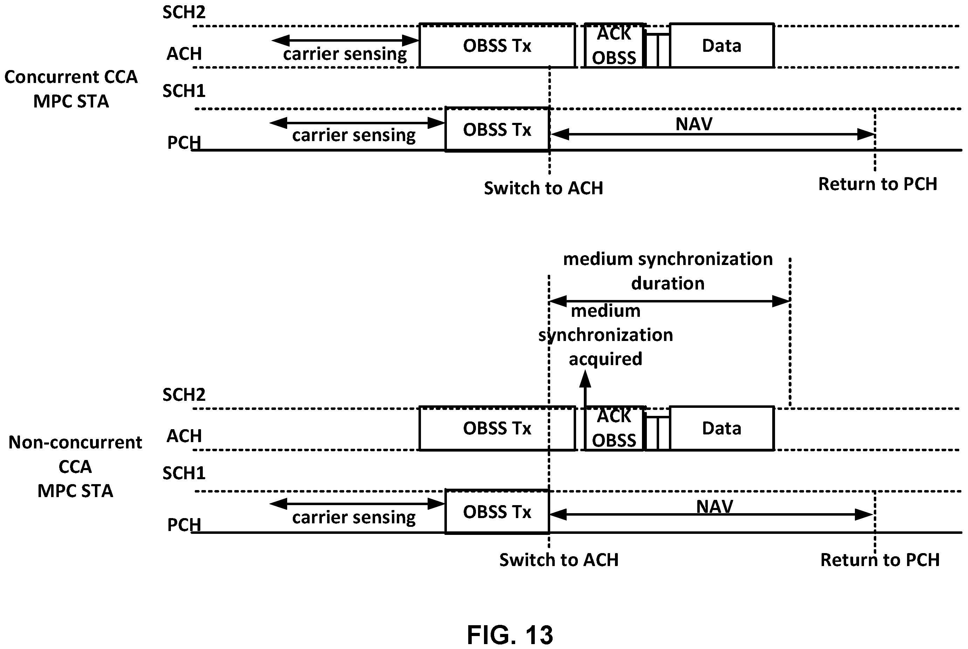

FIG. 13 is an example that contrasts the operation of a concurrent CCA MPC STA and the operation of a non-concurrent CCA MPC STA. Both the concurrent CCA MPC STA and the non-concurrent MPC STA, as shown in FIG. 13, may operate over a plurality of channels, including a primary channel (PCH), a first secondary channel (SCH1), an anchor channel (ACH), and a second secondary channel (SCH2). The concurrent CCA MPC STA may perform concurrent CS on the PCH and the ACH. The non-concurrent CCA MPC STA may perform CS on the PCH only.

The example of FIG. 13 may begin with the concurrent CCA MPC STA or the non-concurrent CCA MPC STA operating on the PCH. A first OBSS transmission may begin on the PCH. Both may detect the first OBSS transmission. Both may detect the first OBSS transmission, for example, if both the concurrent CCA MPC STA and the non-concurrent CCA MPC STA perform CS on the PCH. The concurrent CCA MPC STA and the non-concurrent CCA MPC STA, on detecting the first OBSS transmission on the PCH, may both be configured to set a NAV associated with the PCH (based on a duration of the first OBSS transmission) and to switch to the ACH for the duration of the NAV.

A second OBSS transmission may begin on the ACH before/during the first OBSS transmission on the PCH. The concurrent CCA MPC STA, having concurrent CS capability, may detect the second OBSS transmission before switching to the ACH. The concurrent CCA MPC STA may set a NAV associated with the ACH based on the second OBSS transmission. The concurrent CCA MPC STA may wait until an end of the second OBSS transmission (and any associated ACK frames) before attempting to access the ACH to send (e.g., transmit) a data frame. The concurrent CCA MPC STA may perform a random backoff before sending (e.g., transmitting) the data frame on the ACH. The concurrent CCA MPC STA may switch back to the PCH if the NAV associated with the PCH reaches zero.

A non-concurrent CCA MPC STA may not detect the second OBSS transmission before switching to the ACH. The non-concurrent CCA MPC STA, on switching to the ACH, may thus not be aware of the second OBSS transmission being sent (e.g., transmitted) on the ACH. The non-concurrent CCA MPC STA may not have knowledge of a future time at which it may access the ACH. The non-concurrent MPC STA may be configured to wait for at least a medium synchronization duration for the ACH, after switching to the ACH, before attempting to access the ACH, unless a transmission is detected by the STA during the medium synchronization duration. The non-concurrent MPC STA may start a "MediumSyncDelay" timer for the medium synchronization duration, if the non-concurrent MPC STA switches to the ACH. The value of the "MediumSyncDelay" timer may be set to a "dot11MSDTimerDuration" value. The STA may initialize the "dot11MSDTimerDuration" to an "aPPDUMaxTime" value as defined in Table 36-70 (EHT PHY characteristics) of the IEEE 802.11be draft amendment ("Draft P802. 1 The _D4.1"). The STA may update the "dot11MSDTimerDuration" with a value contained in a Medium Synchronization Delay Information field, if present, of a Basic Multi-Link element in the most recent frame received from its associated AP. The non-concurrent MPC STA may reset the "MediumSyncDelay" timer to zero if the STA receives an MPDU or if the STA receives a PPDU for which the RXVECTOR parameter "TXOP_DURATION" is not set to "UNSPECIFIED."

A non-concurrent CCA MPC STA, in the example of FIG. 13, may detect and receive an ACK frame associated with the second OBSS transmission, after switching to the ACH. Reception of the ACK frame may allow the non-concurrent CCA MPC STA to reset the "MediumSyncDelay" timer to zero and to acquire medium synchronization on the ACH. The non-concurrent CCA MPC STA may wait for an end of the ACK frame before performing a random backoff to send (e.g., transmit) a data frame on the ACH. The non-concurrent CCA MPC STA may switch back to the PCH if the NAV associated with the PCH reaches zero.

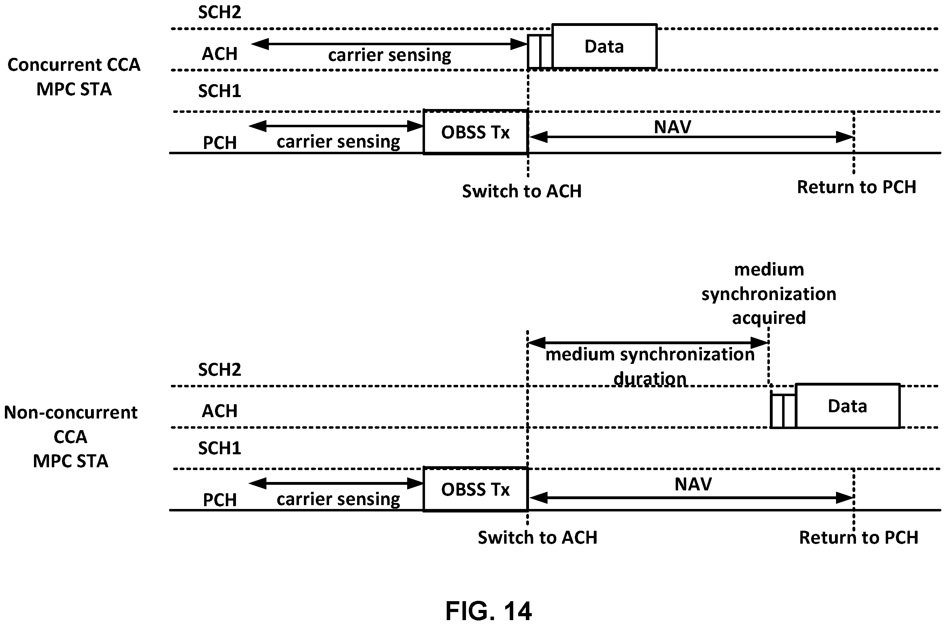

FIG. 14 is another example that contrasts the operation of a concurrent CCA MPC STA and the operation of a non-concurrent CCA MPC STA. Both the concurrent CCA MPC STA and the non-concurrent MPC STA, as in the example of FIG. 13, may operate over a plurality of channels, including a primary channel (PCH), a first secondary channel (SCH1), an anchor channel (ACH), and a second secondary channel (SCH2). The concurrent CCA MPC STA may perform concurrent CS on the PCH and the ACH. The non-concurrent CCA MPC STA may perform CS on the PCH only.

The example of FIG. 14 may begin with the concurrent CCA MPC STA or the non-concurrent CCA MPC STA operating on the PCH. A first OBSS transmission may begin on the PCH. Both may detect the first OBSS transmission. Both may detect the first OBSS transmission, for example, if both the concurrent CCA MPC STA and the non-concurrent CCA MPC STA perform CS on the PCH. The concurrent CCA MPC STA and the non-concurrent CCA MPC STA, on detecting the first OBSS transmission on the PCH, may both be configured to set a NAV associated with the PCH (based on a duration of the first OBSS transmission) and to switch to the ACH for the duration of the NAV.

An ACH may be idle at the time that the concurrent CCA MPC STA or the non-concurrent CCA MPC STA switches to the ACH. The concurrent CCA MPC STA, having concurrent CS capability, may be aware that the ACH is idle. The concurrent CCA MPC STA, having concurrent CS capability, may be aware that the ACH is idle, for example, if the concurrent CCA MPC STA switches to the ACH. The concurrent CCA MPC STA may thus attempt to access the ACH immediately after switching to the ACH. The concurrent CCA, as shown in FIG. 14, may perform a random backoff before sending (e.g., transmitting) a data frame on the ACH. The concurrent CCA MPC STA may switch back to the PCH. The concurrent CCA MPC STA may switch back to the PCH, for example, if the NAV associated with the PCH reaches zero.

A non-concurrent CCA MPC STA, on switching to the ACH, may not have knowledge of whether the ACH is idle or busy. The non-concurrent MPC STA may be configured to wait for at least a medium synchronization duration for the ACH, after switching to the ACH, before attempting to access the ACH, and if a transmission is not detected by the STA during the medium synchronization duration. The non-concurrent MPC STA may start a "MediumSyncDelay" timer for the medium synchronization duration, after switching to the ACH. The value of the "MediumSyncDelay" timer may be set to a "dot11MSDTimerDuration" value. The STA may initialize the "dot11MSDTimerDuration" to an "aPPDUMaxTime" value as defined in Table 36-70 (EHT PHY characteristics) of the IEEE 802.11be draft amendment ("Draft P802. 1 The _D4.1"). The STA may update the "dot11MSDTimerDuration" with a value contained in a Medium Synchronization Delay Information field, if present, of a Basic Multi-Link element in the most recent frame received from its associated AP. The non-concurrent MPC STA may reset the "MediumSyncDelay" timer to zero. The non-concurrent MPC STA may reset the "MediumSyncDelay" timer to zero, for example, if the STA receives an MPDU or if the STA receives a PPDU for which the RXVECTOR parameter "TXOP_DURATION" is not set to "UNSPECIFIED."

A non-concurrent CCA MPC STA, in the example of FIG. 14, may not detect or receive any frame during the medium synchronization duration. The non-concurrent CCA MPC STA may thus not reset the "MediumSyncDelay" timer to zero. The non-concurrent CCA MPC STA may only acquire medium synchronization on the ACH after the entire medium synchronization duration has elapsed. The non-concurrent CCA MPC STA may thus have to wait for the entirety of the medium synchronization duration before attempting to access the ACH, even if the ACH is idle and available for use during the medium synchronization duration. Buffered data at the non-concurrent CCA MPC STA may thus be delayed unnecessarily and the ACH may thus be under-utilized.

Examples described herein address the above-described problem. An AP may send (e.g., transmit) a first frame comprising a medium synchronization duration for a first channel. The first channel may be an anchor channel or an auxiliary primary channel. The AP may send (e.g., transmit) a second frame via the first channel. The AP may send (e.g., transmit) a second frame via the first channel, for example, if the medium synchronization duration for the first channel starts. The medium synchronization duration for the first channel may start. The medium synchronization duration for the first channel may start, for example, if the AP receives a third frame indicating a transmission on a second channel. The transmission may be an OBSS transmission. The transmission may cause the AP to switch from the second channel to the first channel. The second channel may be a primary channel of the AP. The second frame may be sent (e.g., transmitted) during the medium synchronization duration for the first channel. The second frame may allow a non-concurrent CCA MPC STA to acquire medium synchronization on the first channel, without waiting for the entirety of the medium synchronization duration for the first channel.

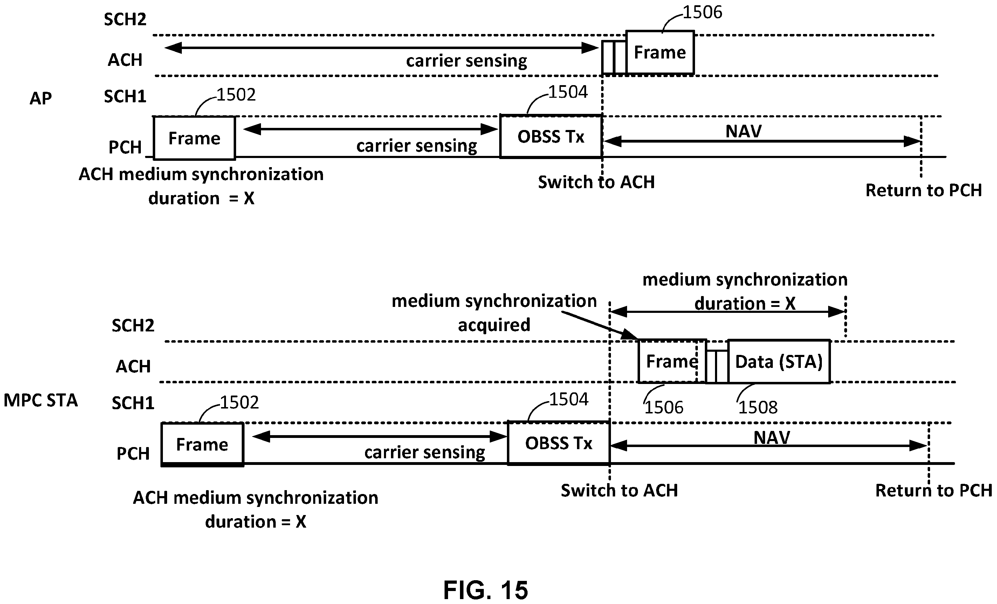

FIG. 15 shows an example procedure which may be performed by an AP over a plurality of channels. FIG. 15 also shows the behavior of a STA, which may be associated with the AP, based on (e.g., in response to) the example AP procedure. The AP may operate over a plurality of channels, including a primary channel (PCH) and an anchor channel (ACH). In an example, the AP may further operate over a first secondary channel (SCH1) and a second secondary channel (SCH2). The AP may be capable of performing concurrent CS on the PCH and the ACH. The AP may support an anchor/auxiliary primary channel medium synchronization assistance mode, which allows the AP to perform the procedure of FIG. 15.

The example procedure, as shown in FIG. 15, may begin with the AP operating on the PCH. In an example, the AP may send (e.g., transmit) a frame 1502 on the PCH. Frame 1502 may be a management frame, such as a beacon frame. Frame 1502 may indicate the PCH and the ACH. Frame 1502 may comprise or indicate a medium synchronization duration for the ACH. Frame 1502 may comprise an indication of support by the of the anchor/auxiliary primary channel medium synchronization assistance mode. Frame 1502 may further comprise an indication of activation/deactivation of the anchor/auxiliary primary channel medium synchronization assistance mode by the AP. A STA associated with the AP may operate on the same channel as the AP. The STA may thus receive frame 1502 via the PCH.

Transmission of a frame 1504 from an OBSS may begin on the PCH. The transmission of a frame 1504 from an OBSS may begin on the PCH, for example, if the AP is operating on the PCH. The AP may detect frame 1504 on the PCH. The AP may be configured to set a NAV associated with the PCH based on receiving frame 1504 on the PCH. Frame 1504 may indicate a transmission on the PCH. A duration of the transmission on the PCH may be provided by a duration field of frame 1504, a transmission opportunity (TXOP) duration field of a PPDU comprising frame 1504, or a length field of the PPDU. The AP may be configured to switch to the ACH for the NAV duration. The AP may start a "MediumSyncDelay" timer for the medium synchronization duration of the ACH, after switching to the ACH. The "MediumSyncDelay" timer may be set based on the medium synchronization duration for the ACH indicated in frame 1504.

An AP may be configured to send (e.g., transmit) a frame 1506 on the ACH during the medium synchronization duration for the ACH, after switching to the ACH. The AP may be capable of concurrent CS on the PCH and the ACH. The AP, as shown in FIG. 15, may send (e.g., transmit) frame 1506 on the ACH (after performing a random backoff) without waiting for expiration of the medium synchronization duration for the ACH. Frame 1506 may be any frame, including a CTS frame, a contention free (CF) end frame, a trigger frame, a QoS data/null frame, or a null data packet (NDP) frame.

An AP may determine a CCA state of the ACH before sending (e.g., transmitting) frame 1506. The AP may send (e.g., transmit) frame 1506 on condition of the CCA state of the ACH being idle. The AP may send (e.g., transmit) frame 1506 on condition of the CCA state of the ACH being idle for a first duration before the AP receives frame 1504 on the PCH. The CCA state of the ACH being idle may comprise a received power measured by the AP on the ACH, during the first duration, being less than a threshold. The first duration may be one of 5.484 milliseconds, 25 microseconds, or 16 microseconds. The threshold may be one of -62 dBm, -72 dBm, or -82 dBm. The CCA state of the ACH being idle may comprise a NAV associated with the ACH being equal to zero.

An AP may send (e.g., transmit) frame 1506 on the ACH on condition of a backoff count associated with the ACH being zero. The backoff count may be initialized to a random number by the AP. The backoff count may be initialized by the AP after an end of a PPDU carrying frame 1504 on the PCH; an indication of a successful preamble detection; or an indication of a successful MPDU detection on the PCH.

A STA associated with the AP may also detect and receive frame 1504 on the PCH. The STA, like the AP, may be configured to set a NAV associated with the PCH based on receiving frame 1504 on the PCH. The STA may also be configured to switch to the ACH for the NAV duration along with the AP. The STA may be configured to switch to the ACH. The STA may be configured to switch to the ACH, for example, if the STA is an MPC STA. The STA may start a "MediumSyncDelay" timer for the medium synchronization duration of the ACH, after switching to the ACH. The "MediumSyncDelay" timer may be set based on the medium synchronization duration for the ACH indicated in frame 1502.

A STA, as shown in FIG. 15, may be a non-concurrent CCA MPC STA. The STA, on switching to the ACH, may not be aware of whether a transmission is taking place on the ACH. The STA may be configured to wait for the "MediumSyncDelay" timer to expire before attempting to access the ACH. The transmission by the AP of frame 1506 may allow the non-concurrent CCA MPC STA acquiring medium synchronization on the ACH. The STA, on receiving frame 1506, may reset the "MediumSyncDelay" timer to zero. The STA may then proceed to access the ACH, after performing a random backoff, to send (e.g., transmit) a frame 1508 on the ACH. Frame 1508 may be a QoS data/null frame, for example. Frame 1508 may be based on (e.g., in response to) frame 1506. Frame 1506 may be a trigger frame that triggers transmission of frame 1508 by the STA.

A STA may send (e.g., transmit) frame 1508 on the ACH on condition of a backoff count associated with the ACH being zero. The backoff count may be initialized to a random number by the STA. The backoff count may be initialized by the STA after an end of a PPDU carrying frame 1504 on the PCH; an indication of a successful preamble detection; or an indication of a successful MPDU detection on the PCH.

A STA may be a concurrent CCA MPC STA. The STA may be capable of concurrent CS on the PCH and the ACH. The STA may determine a CCA state of the ACH. A CCA state may include a physical CS state and a virtual CS state. The CCA state may be considered idle. The CCA state may be considered idle, for example, if both the physical CS state and the virtual CS state indicate that the channel is idle. The STA may send (e.g., transmit) frame 1506 (e.g., together or in place of the AP) on condition of the CCA state of the ACH being idle. The STA may send (e.g., transmit) frame 1506 on condition that the anchor/auxiliary primary channel medium synchronization assistance mode is activated by the AP. The STA may send (e.g., transmit) frame 1506 on condition of the CCA state of the ACH being idle for a first duration before the STA receives frame 1504 on the PCH. The CCA state of the ACH being idle may comprise a received power measured by the STA on the ACH, during the first duration, being less than a threshold. The first duration may be one of 5.484 milliseconds, 25 microseconds, or 16 microseconds, for example. The threshold may be one of -62 dBm, -72 dBm, or -82 dBm, for example. The CCA state of the ACH being idle may comprise a NAV associated with the ACH being equal to zero.

A STA may send (e.g., transmit) frame 1506 on the ACH on condition of a backoff count associated with the ACH being zero. The backoff count may be initialized to a random number by the STA. The backoff count may be initialized by the STA after an end of a PPDU carrying frame 1504 on the PCH; an indication of a successful preamble detection; or an indication of a successful MPDU detection on the PCH.

A STA may send (e.g., transmit) frame 1506 simultaneously with the AP. Frame 1506 may be of a specific frame type that is known to both AP and STA. The backoff count associated with the ACH may be initialized to a value that is known to both AP and STA (e.g. 0).

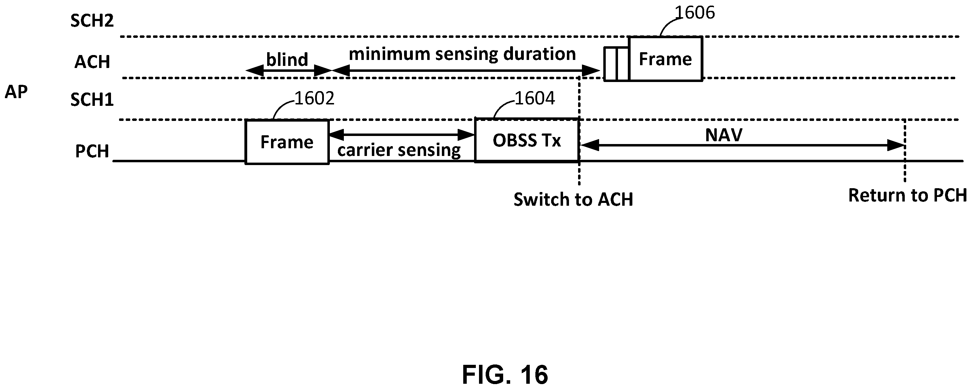

FIG. 16 shows another example procedure which may be performed by an AP over a plurality of channels. The AP may operate over a plurality of channels, including a primary channel (PCH) and an anchor channel (ACH). The AP may further operate over a first secondary channel (SCH1) and a second secondary channel (SCH2). The AP may be capable of performing concurrent CS on the PCH and the ACH. The AP may support an anchor/auxiliary primary channel medium synchronization assistance mode, which allows the AP to perform the procedure of FIG. 16. The example procedure of FIG. 16 may be used independently or in combination with the procedure of FIG. 15.

The example procedure, as shown in FIG. 16, may begin with the AP operating on the PCH. The AP may send (e.g., transmit) a frame 1602 on the PCH. Frame 1602 may be any frame, including a data frame, a control frame, or a management frame. The AP may not be capable of performing CS on the ACH at the time of sending (e.g., transmitting) frame 1602 on the PCH. The AP may thus not be able to monitor the ACH for transmissions if the AP sends (e.g., transmits) frame 1602 on the PCH.

Transmission of a frame 1504 from an OBSS may begin on the PCH after the AP may send (e.g., transmit) frame 1602 on the PCH. The AP may detect frame 1604 on the PCH. The AP may be configured to set a NAV associated with the PCH based on receiving frame 1604 on the PCH. Frame 1604 may indicate a transmission on the PCH. A duration of the transmission on the PCH may be provided by a duration field of frame 1604, a transmission opportunity (TXOP) duration field of a PPDU comprising frame 1604, or a length field of the PPDU. The AP may be configured to switch to the ACH for the NAV duration. The AP may start a "MediumSyncDelay" timer for the medium synchronization duration of the ACH, after switching to the ACH. The "MediumSyncDelay" timer may be set based on the medium synchronization duration for the ACH indicated in.

An AP may be configured to send (e.g., transmit) a frame 1606 on the ACH during the medium synchronization duration for the ACH, after switching to the ACH. The AP may be capable of concurrent CS on the PCH and the ACH. The AP, as shown in FIG. 16, may send (e.g., transmit) frame 1606 on the ACH (after performing a random backoff) without waiting for expiration of the medium synchronization duration for the ACH. Frame 1606 may be any frame, including a CTS frame, a contention free (CF) end frame, a trigger frame, a QoS data/null frame, or a null data packet (NDP) frame.

An AP may determine a CCA state of the ACH before sending (e.g., transmitting) frame 1606. The AP may send (e.g., transmit) frame 1606 on condition of the CCA state of the ACH being idle. The AP may send (e.g., transmit) frame 1606 on condition of the CCA state of the ACH being idle for a minimum sensing duration. The minimum sensing duration may start from an end of a PPDU carrying frame 1602 sent (e.g., transmitted) on the PCH. Requiring that the ACH be idle for a minimum sensing duration before sending (e.g., transmitting) frame 1606 reduces the probability of frame 1606 interfering with "hidden" transmissions taking place on the ACH, for example, transmissions that the AP unable to detect on the ACH if the AP sending (e.g., transmitting) frame 1602 on the PCH. The CCA state of the ACH being idle may comprise a received power measured by the AP on the ACH, during the first duration, being less than a threshold. The minimum sensing duration may be one of 5.484 milliseconds, 25 microseconds, or 16 microseconds, for example. The value of the minimum sensing duration may be set to the "dot11MSDTimerDuration" value. The threshold may be one of -62 dBm, -72 dBm, or -82 dBm, for example. The CCA state of the ACH being idle may comprise a NAV associated with the ACH being equal to zero.

The transmission by the AP of frame 1606 may allow a non-concurrent CCA MPC STA (associated with the AP) to acquire medium synchronization on the ACH. The STA, on receiving frame 1606, may reset a "MediumSyncDelay" timer to zero. The STA may then proceed to access the ACH, after performing a random backoff, to send (e.g., transmit) a frame on the ACH.

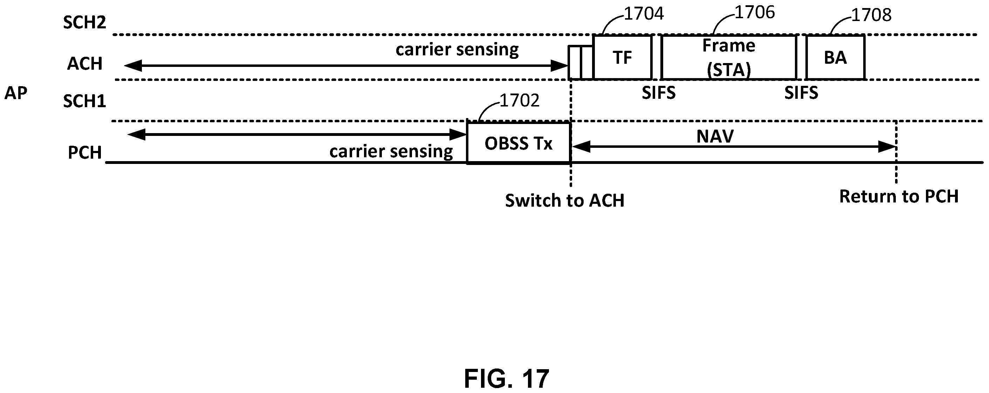

FIG. 17 shows another example procedure which may be performed by an AP over a plurality of channels. The AP may operate over a plurality of channels, including a primary channel (PCH) and an anchor channel (ACH). The AP may further operate over a first secondary channel (SCH1) and a second secondary channel (SCH2). The AP may be capable of performing concurrent CS on the PCH and the ACH. The AP may support an anchor/auxiliary primary channel medium synchronization assistance mode, which allows the AP performing the procedure of FIG. 17. The example procedure of FIG. 17 may be used independently or in combination with the procedure of FIG. 15 and/or the procedure of FIG. 16.

The example procedure, as shown in FIG. 17, may begin with the AP operating on the PCH. transmission of a frame 1702 from an OBSS may begin on the PCH. Transmission of a frame 1702 from an OBSS may begin on the PCH, for example, if the AP operates on the PCH. The AP may detect frame 1702 on the PCH. The AP may be configured to set a NAV associated with the PCH based on receiving frame 1702 on the PCH. Frame 1702 may indicate a transmission on the PCH. A duration of the transmission on the PCH may be provided by a duration field of frame 1702, a transmission opportunity (TXOP) duration field of a PPDU comprising frame 1702, or a length field of the PPDU. The AP may be configured to switch to the ACH for the NAV duration. The AP may be configured not to start a "MediumSyncDelay" timer for the medium synchronization duration of the ACH, after switching to the ACH.

An AP may be configured to send (e.g., transmit) a trigger frame 1704 on the ACH after switching to the ACH. Trigger frame 1704 may be addressed to one or more STA associated with the AP. The AP may send (e.g., transmit) trigger frame 1704 on the ACH after performing a random backoff. The AP may send (e.g., transmit) trigger frame 1704 without regard to a medium synchronization duration of the ACH. The AP may send (e.g., transmit) trigger frame 1704 without regard to a medium synchronization duration of the ACH, for example, if the AP does not start a "MediumSyncDelay" timer on switching to the ACH.

An AP may determine a CCA state of the ACH before sending (e.g., transmitting) trigger frame 1704. The AP may send (e.g., transmit) trigger frame 1704 on condition of the CCA state of the ACH being idle. The CCA state of the ACH being idle may comprise a received power measured by the AP on the ACH, during a first duration, being less than a threshold. The first duration may be one of 5.484 milliseconds, 25 microseconds, or 16 microseconds, for example. The threshold may be one of -62 dBm, -72 dBm, or -82 dBm, for example. The CCA state of the ACH being idle may comprise a NAV associated with the ACH being equal to zero.

The transmission by the AP of trigger frame 1704 may allow a non-concurrent CCA MPC STA (associated with the AP) to acquire medium synchronization on the ACH. The STA may be associated with the AP and may have switched to the ACH along with the AP. The STA, on receiving trigger frame 1704, may reset to zero a "MediumSyncDelay" timer associated with the ACH. Trigger frame 1704 may allow the STA accessing the ACH in response to trigger frame 1704. The STA may not need to perform a random backoff before attempting to access the ACH. The STA, as shown in FIG. 17, may send (e.g., transmit) a frame 1706 a short interframe space (SIFS) after trigger frame 1704. The STA, as shown in FIG. 17, may send (e.g., transmit) a frame 1706 a short interframe space (SIFS) after trigger frame 1704, for example, based on (e.g., in response to) trigger frame 1704. The AP may acknowledge frame 1706 by sending (e.g., transmitting) a BA frame 1708 to the STA.

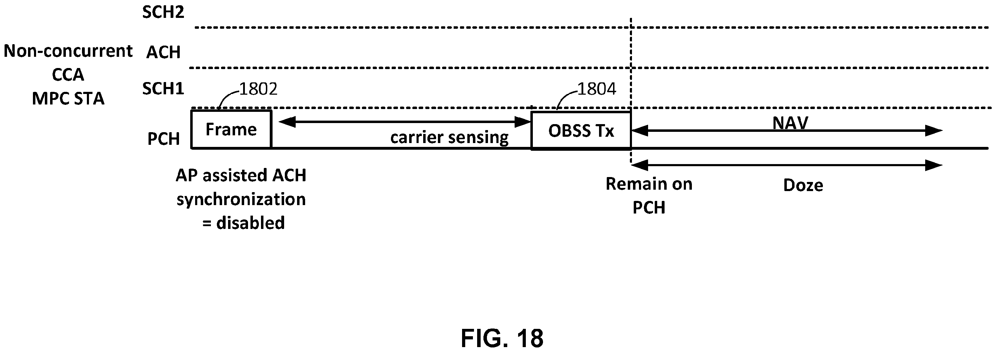

FIG. 18 shows an example procedure which may be performed by a STA (e.g., a non-concurrent CCA MPC STA). The STA may be associated with an AP. The AP may support an anchor/auxiliary primary channel medium synchronization assistance mode, which allows the AP to perform the procedure of FIG. 15, FIG. 16, and/or FIG. 17. The AP may operate over a plurality of channels, including a primary channel (PCH) and an anchor channel (ACH). In an example, the AP may further operate over a first secondary channel (SCH1) and a second secondary channel (SCH2). The AP may be capable of performing concurrent CS on the PCH and the ACH. The example procedure of FIG. 18 may be used in combination with the procedure of FIG. 15, FIG. 16, and/or FIG. 17.

The example procedure, as shown in FIG. 18, may begin with the STA operating on the PCH along with the AP. In an example, the STA may receive a frame 1802 sent (e.g., transmitted) by the AP on the PCH. Frame 1802 may be a management frame, such as a beacon frame. Frame 1802 may indicate the PCH and the ACH. Frame 1802 may comprise or indicate a medium synchronization duration for the ACH. Frame 1802 may comprise an indication of support by the AP of the anchor/auxiliary primary channel medium synchronization assistance mode. Frame 1802 may further comprise an indication of activation/deactivation by the AP of the anchor/auxiliary primary channel medium synchronization assistance mode.

Transmission of a frame 1804 from an OBSS may begin on the PCH. Transmission of a frame 1804 from an OBSS may begin on the PCH, for example, if the STA is operating on the PCH. The STA may detect frame 1804 on the PCH. The STA may be configured to set a NAV associated with the PCH based on receiving frame 1804 on the PCH. Frame 1804 may indicate a transmission on the PCH. A duration of the transmission on the PCH may be provided by a duration field of frame 1804, a transmission opportunity (TXOP) duration field of a PPDU comprising frame 1804, or a length field of the PPDU.

A STA may be configured to switch to the ACH after receiving frame 1804 on the PCH, on condition that the anchor/auxiliary primary channel medium synchronization assistance mode is activated by the AP in frame 1802. A STA, as shown in FIG. 18, may remain on the PCH after receiving frame 1804. A STA, as shown in FIG. 18, may remain on the PCH after receiving frame 1804, for example, if frame 1802 indicates that the anchor/auxiliary primary channel medium synchronization mode is deactivated. The STA may enter a doze state. The STA may enter a doze state, for example, if the AP may switch to the ACH on receiving frame 1804 and if the STA does not switch to the ACH along with the AP. The STA may enter the doze state for the duration of the NAV set based on receiving frame 1804.

A STA may be configured to switch to the ACH for the duration of the NAV set based on receiving frame 1804. The STA may be configured to switch to the ACH for the duration of the NAV set based on receiving frame 1804, for example, if the STA switches to the ACH (e.g., if frame 1802 indicates that the anchor/auxiliary primary channel medium synchronization assistance mode is activated by the AP). The AP may start a "MediumSyncDelay" timer for the medium synchronization duration of the ACH, after switching to the ACH. The "MediumSyncDelay" timer may be set based on the medium synchronization duration for the ACH indicated in frame 1804.

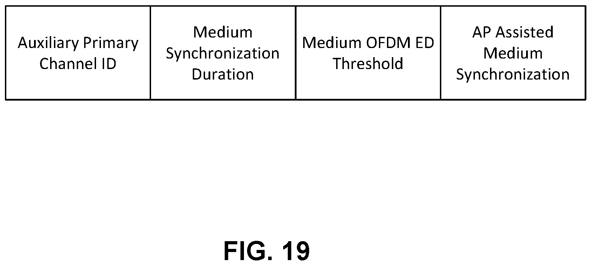

FIG. 19 shows an example information element referred as an "anchor channel element" or an "auxiliary primary channel element." The information element may be used by an AP to inform an associated STA of medium synchronization information/parameters for an anchor/auxiliary primary channel. The information element may be carried in a MAC capabilities element of the AP.

The information element, as shown in FIG. 19, may comprise an anchor/auxiliary primary channel ID field, a medium synchronization duration field, a medium OFDM ED threshold field, and an AP assisted medium synchronization field. The anchor/auxiliary primary channel ID field may indicate an identifier of the anchor/auxiliary primary channel. The medium synchronization duration field may indicate a duration of the medium synchronization duration (e.g., MediumSyncDelay timer) for the anchor/auxiliary primary channel. The medium synchronization duration may be indicated in units of 32 microseconds. The medium OFDM ED threshold field may indicate a threshold value that may be used by a STA during medium synchronization recovery for the anchor/auxiliary primary channel. The AP assisted medium synchronization field may indicate whether the AP supports a medium synchronization assistance mode for the anchor/auxiliary primary channel. Support of the medium synchronization assistance mode may comprise the AP supporting one or more of the procedures described in FIGs. 15-17 above.

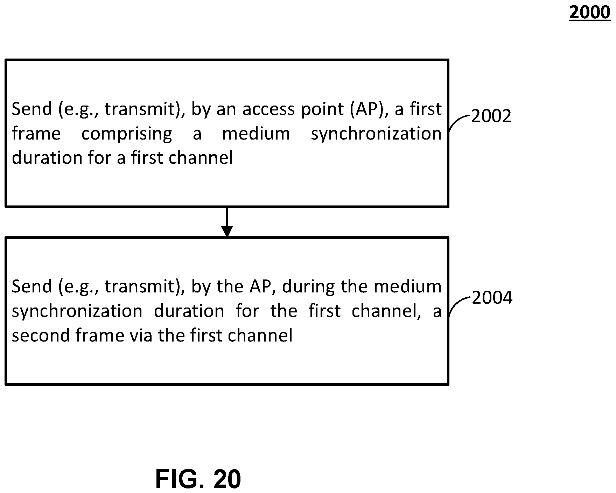

FIG. 20 shows an example process 2000 performed by an AP over a plurality of channels. The AP may be the AP described above with reference to FIGs. 15-18. The AP may operate over a plurality of channels, including a first channel and a second channel. The first channel may be an anchor channel or an auxiliary primary channel of the AP. The second channel may be a primary channel of the AP. The AP may further operate over one or more secondary channel. The AP may be capable of performing concurrent CS on the first channel and the second channel. The AP may support a medium synchronization assistance mode for the first channel and/or the second channel. Process 2000 may include steps 2002 and 2004 as shown in FIG. 20.

Step 2002 may include sending (e.g., transmitting), by the AP, a first frame comprising a medium synchronization duration for the first channel. The first frame may further comprise an indication of the first and the second channel. The first frame further may comprise an indication of support by the AP of a medium synchronization assistance mode for the first channel and/or the second channel. The first frame may further comprise an indication of activation or deactivation by the AP of the medium synchronization assistance mode for the first channel and/or the second channel. The first frame may be a management frame, such as a beacon frame.

Step 2004 may include sending (e.g., transmitting), by the AP, during the medium synchronization duration for the first channel, a second frame via the first channel. The second may be any frame, including a CTS frame, a contention free (CF) end frame, a trigger frame, a QoS data/null frame, or a null data packet (NDP) frame.

Process 2000 may further comprise receiving, by the AP and via the second channel, a third frame indicating a transmission on the second channel. The third frame may be an OBSS frame. The medium synchronization duration for the first channel may start based on the AP receiving the third frame. A duration of the transmission on the second channel may be provided by a duration field of the third frame, a transmission opportunity (TXOP) duration field of a physical layer protocol data unit (PPDU) comprising the third frame, or a length field of the PPDU.

Process 2000 may further comprise determining, by the AP, a clear channel assessment (CCA) state of the first channel. The sending (e.g., transmitting) of the second frame by the AP may be conditioned on the CCA state of the first channel being idle for a first duration before receiving the third frame. The CCA state being idle may comprise a network allocation vector (NAV) associated with the first channel being equal to zero. The CCA state being considered idle may comprise a received power measured by the AP on the first channel during the first duration being less than a threshold. The threshold may be one of -62 dBm; -72 dBm; or -82 dBm, for example. The first duration may be equal to 5.484 ms; 25 µs; or 16 µs, for example.

The sending (e.g., transmitting) of the second frame by the AP may be conditioned on a backoff count associated with the first channel being zero. The backoff count may be initialized to a random number after one of: an end of a PPDU carrying the third frame; an indication of a successful preamble detection; or an indication of a successful medium access layer protocol data unit (MPDU) detection.

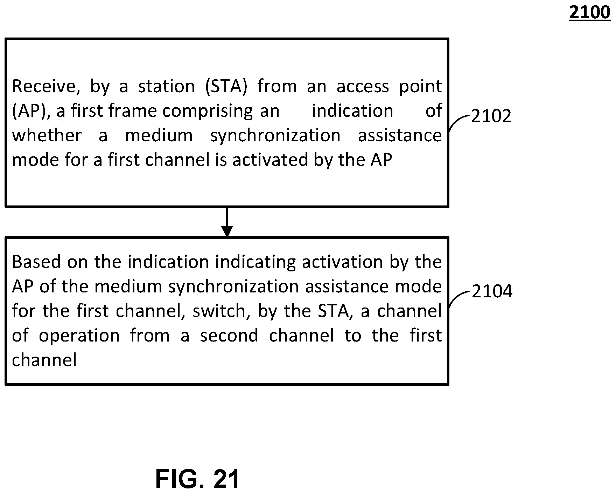

FIG. 21 shows an example process 2100 performed by a STA over a plurality of channels. The STA may be the STA described above with reference to FIGs. 15-18. The STA may be a non-concurrent CCA MPC STA. The STA may be associated with an AP. The AP may operate over a plurality of channels, including a first channel and a second channel. The first channel may be an anchor channel or an auxiliary primary channel of the AP. The second channel may be a primary channel of the AP. The AP may further operate over one or more secondary channel. The AP may be capable of performing concurrent CS on the first channel and the second channel. The AP may support a medium synchronization assistance mode for the first channel and/or the second channel. Process 2100 may include steps 2102 and 2104 as shown in FIG. 21.

Step 2102 may comprise receiving, by the STA from the AP, a first frame comprising an indication of whether a medium synchronization assistance mode for the first channel is activated by the AP. The first frame may further comprise a medium synchronization duration for the first channel. The first frame may further comprise an indication of the first and the second channel. The first frame may be a management frame, such as a beacon frame.

Process 2100 may further comprise receiving, by the STA and via the second channel, a second frame indicating a transmission on the second channel. The second frame may be an OBSS frame. The medium synchronization duration for the first channel may start based on the STA receiving the second frame. A duration of the transmission on the second channel is provided by a duration field of the second frame, a transmission opportunity (TXOP) duration field of a physical layer protocol data unit (PPDU) comprising the second frame, or a length field of the PPDU.

Step 2104 may comprise, based on the indication indicating activation by the AP of the medium synchronization assistance mode for the first channel, switching, by the STA, a channel of operation from the second channel to the first channel. Process 2100 may further comprise receiving, by the STA from the AP, during the medium synchronization duration and via the first channel, a third frame. The third frame may be any frame, including a CTS frame, a contention free (CF) end frame, a trigger frame, a QoS data/null frame, or a null data packet (NDP) frame.

Process 2100 may further comprise sending (e.g., transmitting), by the STA to the AP, via the first channel, a fourth frame. The fourth frame may comprise a QoS data frame or a QoS null frame.

The sending (e.g., transmitting) of the fourth frame may be conditioned on a backoff count associated with the first channel being zero. The backoff count may be initialized to a random number after one of: an end of a first PPDU carrying the second frame; an indication of a successful preamble detection of the first PPDU; or an indication of a successful medium access layer protocol data unit (MPDU) detection. The third frame may be a trigger frame and the sending (e.g., transmitting) of the fourth frame may be based on (e.g., in response to) the trigger frame.

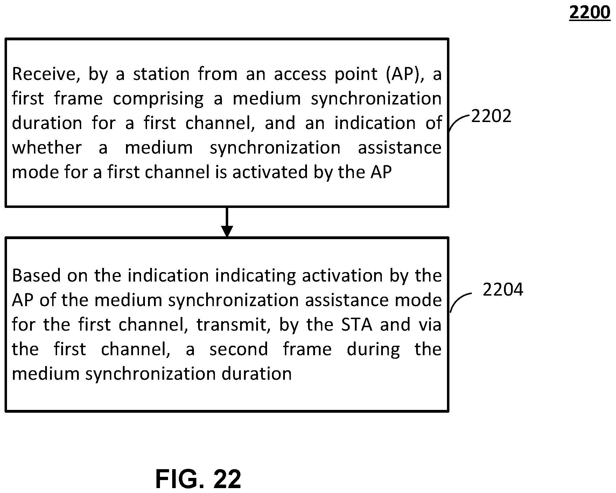

FIG. 22 shows an example process 2200 performed by a station (STA) over a plurality of channels. The STA may be the STA described above with reference to FIGs. 15-18. The STA may be a concurrent CCA MPC STA. The STA may be associated with an AP. The AP may operate over a plurality of channels, including a first channel and a second channel. The first channel may be an anchor channel or an auxiliary primary channel of the AP. The second channel may be a primary channel of the AP. The AP may further operate over one or more secondary channel. The AP may be capable of performing concurrent CS on the first channel and the second channel. The AP may support a medium synchronization assistance mode for the first channel and/or the second channel. Process 2200 may include steps 2202 and 2204 as shown in FIG. 22.

Step 2202 may comprise receiving, by the STA from the AP, a first frame comprising a medium synchronization duration for the first channel. The first frame may further comprise an indication of the first and the second channel. The first frame may further comprise an indication of support by the AP of a medium synchronization assistance mode for the first channel and/or the second channel. The first frame may further comprise an indication of activation or deactivation by the AP of the medium synchronization assistance mode for the first channel and/or the second channel. The first frame may be a management frame, such as a beacon frame.

Step 2004 may comprise, based on the indication indicating activation by the AP of the medium synchronization assistance mode for the first channel, sending (e.g., transmitting), by the STA, during the medium synchronization duration for the first channel, a second frame via the first channel. The second may be any frame, including a CTS frame, a contention free (CF) end frame, a trigger frame, a QoS data/null frame, or a null data packet (NDP) frame.

Process 2200 may further comprise receiving, by the STA and via the second channel, a third frame indicating a transmission on the second channel. The third frame may be an OBSS frame. The medium synchronization duration for the first channel may start based on the STA receiving the third frame. A duration of the transmission on the second channel may be provided by a duration field of the third frame, a transmission opportunity (TXOP) duration field of a physical layer protocol data unit (PPDU) comprising the third frame, or a length field of the PPDU.

Process 2200 may further comprise determining, by the STA, a clear channel assessment (CCA) state of the first channel. The sending (e.g., transmitting) of the second frame by the STA may be conditioned on the CCA state of the first channel being idle for a first duration before receiving the third frame. The CCA state being idle comprises a network allocation vector (NAV) associated with the first channel being equal to zero. The CCA state being considered idle may comprise a received power measured by the STA on the first channel during the first duration being less than a threshold. The threshold may be one of -62 dBm; -72 dBm; or -82 dBm, for example. The first duration may be equal to 5.484 ms; 25 µs; or 16 µs, for example.

The sending (e.g., transmitting) of the second frame by the STA may be conditioned on a backoff count associated with the first channel being zero. The backoff count may be initialized to a random number after one of: an end of a PPDU carrying the third frame; an indication of a successful preamble detection; or an indication of a successful medium access layer protocol data unit (MPDU) detection.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1A. A method comprising: sending, by an access point, a first frame indicating a synchronization duration for a first channel.

Clause 1B. The method of clause 1A, further comprising: receiving, by the access point and via a second channel, a second frame indicating a transmission on the second channel, wherein the synchronization duration starts based on receiving the second frame.

Clause 1C. The method of clause 1B, further comprising: after receiving the second frame and before an end of the synchronization duration, sending, by the access point and via the first channel, a third frame. Reference to clause 1 herein may refer to one or each of clause 1A, clause 1B and clause 1C.

Clause 2. The method of clause 1, further comprising: after receiving the second frame and before an end of the synchronization duration, switching, by the access point, an operation from a second channel to the first channel.

Clause 3. The method of any one of clauses 1-2, further comprising: determining, by the access point, a clear channel assessment (CCA) state of the first channel; and wherein transmission of the second frame is based on the CCA state of the first channel being idle for a first duration before receiving the third frame; the CCA state being idle comprises a network allocation vector (NAV), associated with the first channel, being equal to zero; and the CCA state being idle comprises a received power, measured by the access point on the first channel during the first duration, being less than a threshold.

Clause 4. The method of any one of clauses 1-3, wherein the threshold is at least one of: - 62 dBm; -72 dBm; or -82 dBm; and the first duration is at least one of: 5.484 ms; 25 µs; or 16 µs.

Clause 5. The method of any one of clauses 1-4, wherein a duration of the transmission on the second channel is indicated by at least one of: a duration field of the third frame; a transmission opportunity (TXOP) duration field of a physical layer protocol data unit (PPDU) comprising the third frame; or a length field of the PPDU.

Clause 6. The method of any one of clauses 1-5, wherein: transmission of the second frame is based on a backoff counter, associated with the first channel, being zero; and initializing the backoff counter to a random number after at least one of: an end of a PPDU carrying the third frame; an indication of a successful preamble detection; or an indication of a successful medium access layer protocol data unit (MPDU) detection.

Clause 7. The method of any one of clauses 1-6, wherein the second frame is an overlapped basic service set (OBSS) frame.

Clause 8. The method of any one of clauses 1-7, wherein: the first channel is an auxiliary primary channel; and the second channel is a primary channel.

Clause 9. The method of any one of clauses 1-8, further comprising: after switching an operation to the first channel, starting a timer for the synchronization duration.

Clause 10A. A method comprising: sending, by an access point, a first frame indicating a synchronization duration for a first channel.

Clause 10B. The method of clause 10A, further comprising: receiving, by the access point and via a second channel, a second frame indicating a transmission on the second channel.

Clause 10C. The method of clause 10B, further comprising: after receiving the second frame and before an end of the synchronization duration, switching, by the access point, an operation from a second channel to the first channel. Reference to clause 10 herein may refer to one or each of clause 10A, clause 10B and clause 10C.

Clause 11. The method of clause 10, further comprising: after receiving the second frame and before an end of the synchronization duration, sending, by the access point and via the first channel, a third frame, wherein: the synchronization duration starts based on receiving the second frame.

Clause 12. The method of any one of clauses 1-11, wherein the first frame further comprises at least one of: an indication of the first and the second channel; or a management frame.

Clause 13. The method of any one of clauses 1-12, wherein the second frame comprises at least one of: a clear to send (CTS) frame; a contention free (CF) end frame; a trigger frame; a Quality of Service (QoS) data frame; a QoS null frame; or a null data packet (NDP).

Clause 14. The method of any one of clauses 1-13, wherein the first frame further comprises an indication of support, by the access point, of an auxiliary primary channel medium synchronization assistance mode.

Clause 15. The method of any one of clauses 1-14, wherein the first frame further comprises an indication of at least one of: activation of an auxiliary primary channel medium synchronization assistance mode supported by the access point; or deactivation of an auxiliary primary channel medium synchronization assistance mode supported by the access point.

Clause 16A. A method comprising: receiving, by a station, a first frame indicating a synchronization duration for a first channel.

Clause 16B. The method of clause 16A, further comprising: receiving, by the station and via a second channel, a second frame indicating a transmission on the second channel, wherein the synchronization duration starts based on receiving the second frame.

Clause 16C. The method of clause 16B, after receiving the second frame and before an end of the synchronization duration, receiving, by the station from an access point and via the first channel, a third frame. Reference to clause 16 herein may refer to one or each of clause 16A, clause 16B and clause 16C.

Clause 17. The method of clause 16, wherein the first frame further comprises: an indication of a medium synchronization assistance mode for the first channel; and the method further comprises: after receiving the second frame and before an end of the synchronization duration, switching, by the station, an operation from a second channel to the first channel.

Clause 18. The method of any one of clauses 16-17, further comprising: sending, by the station via the first channel and based on the third frame comprising a trigger frame, a fourth frame, wherein the fourth frame comprises at least one of: a Quality of Service (QoS) data frame; or a QoS null frame.

Clause 19. The method of any one of clauses 16-18, wherein: the sending of the fourth frame is further based on a backoff counter associated with the first channel being zero; and the backoff counter is initialized to a random number after at least one of: the end of a first physical layer protocol data unit (PPDU) comprising the second frame; an indication of a successful preamble detection of the first PPDU; or an indication of a successful medium access layer protocol data unit (MPDU) detection.

Clause 20. The method of any one of clauses 16-19, wherein a duration of the transmission on the second channel is indicated by at least one of: a duration field of the second frame; a transmission opportunity (TXOP) duration field of a first physical layer protocol data unit (PPDU) comprising the second frame; or a length field of the first PPDU.

Clause 21. The method of any one of clauses 16-20, wherein the third frame comprises at least one of: a clear to send (CTS) frame; a contention free end (CF-end) frame; a trigger frame; a null data packet (NDP); a Quality of Service (QoS) data frame; or a QoS null frame.

Clause 22. The method of any one of clauses 16-21, wherein: the first channel is an auxiliary primary channel; and the second channel is a primary channel.

Clause 23. The method of any one of clauses 16-22, further comprising: after switching an operation to the first channel, starting a timer for the synchronization duration.

Clause 24. The method of any one of clauses 16-23, wherein the first frame further comprises an indication of the first and the second channel.

An access point may perform a method comprising multiple operations. The access point may send a first frame indicating a synchronization duration for a first channel; may receive, via a second channel, a second frame indicating a transmission on the second channel, wherein the synchronization duration may start based on receiving the second frame. The access point may send, via the first channel, a third frame after receiving the second frame and before an end of the synchronization duration. The access point may switch an operation from a second channel to the first channel after receiving the second frame and before an end of the synchronization duration. The access point may determine a clear channel assessment (CCA) state of the first channel; and wherein transmission of the second frame may be based on the CCA state of the first channel being idle for a first duration before receiving the third frame; the CCA state being idle may comprise a network allocation vector (NAV), associated with the first channel, being equal to zero; and the CCA state being idle may comprise a received power, measured by the access point on the first channel during the first duration, being less than a threshold; wherein the threshold may be at least one of: -62 dBm; -72 dBm; or -82 dBm; and the first duration may be at least one of: 5.484 ms; 25 µs; or 16 µs; wherein a duration of the transmission on the second channel may be indicated by at least one of: a duration field of the third frame; a transmission opportunity (TXOP) duration field of a physical layer protocol data unit (PPDU) comprising the third frame; or a length field of the PPDU; wherein: transmission of the second frame may be based on a backoff counter, associated with the first channel, being zero; and initializing the backoff counter to a random number after at least one of: an end of a PPDU carrying the third frame; an indication of a successful preamble detection; or an indication of a successful medium access layer protocol data unit (MPDU) detection; wherein the second frame may be an overlapped basic service set (OBSS) frame; wherein: the first channel may be an auxiliary primary channel; and the second channel may be a primary channel. The access point may start a timer for the synchronization duration after switching an operation to the first channel. A computing device may comprise: one or more processors; and memory storing instructions that, when executed by the one or more processors, cause the computing device to perform the described method, additional operations and/or include the additional elements. A system comprising: an access point configured to perform the described method, additional operations and/or include the additional elements; and a station configured to receive the first frame. A computer-readable medium storing instructions that, when executed, cause performance of the described method, additional operations and/or include the additional elements.

An access point may perform a method comprising multiple operations. The access point may send a first frame indicating a synchronization duration for a first channel; may receive, via a second channel, a second frame indicating a transmission on the second channel; may switch an operation from a second channel to the first channel after receiving the second frame and before an end of the synchronization duration. The access point may send, via the first channel, a third frame after receiving the second frame and before an end of the synchronization duration, wherein: the synchronization duration may start based on receiving the second frame; wherein the first frame may further comprise at least one of: an indication of the first and the second channel; or a management frame; wherein the second frame may comprise at least one of: a clear to send (CTS) frame; a contention free (CF) end frame; a trigger frame; a Quality of Service (QoS) data frame; a QoS null frame; or a null data packet (NDP); wherein the first frame may further comprise an indication of support, by the access point, of an auxiliary primary channel medium synchronization assistance mode; wherein the first frame may further comprise an indication of at least one of: activation of an auxiliary primary channel medium synchronization assistance mode supported by the access point; or deactivation of an auxiliary primary channel medium synchronization assistance mode supported by the access point. A computing device may comprise: one or more processors; and memory storing instructions that, when executed by the one or more processors, cause the computing device to perform the described method, additional operations and/or include the additional elements. A system comprising: an access point configured to perform the described method, additional operations and/or include the additional elements; and a station configured to receive the first frame. A computer-readable medium storing instructions that, when executed, cause performance of the described method, additional operations and/or include the additional elements.

A station may perform a method comprising multiple operations. The station may receive a first frame indicating a synchronization duration for a first channel; may receive, via a second channel, a second frame indicating a transmission on the second channel, wherein the synchronization duration may start based on receiving the second frame. The station may receive, from an access point and via the first channel, a third frame after receiving the second frame and before an end of the synchronization duration, wherein the first frame may further comprise: an indication of a medium synchronization assistance mode for the first channel. The station may switch an operation from a second channel to the first channel after receiving the second frame and before an end of the synchronization duration. The station may send, via the first channel and based on the third frame comprising a trigger frame, a fourth frame, wherein the fourth frame may comprise at least one of: a Quality of Service (QoS) data frame; or a QoS null frame, wherein: the sending of the fourth frame is further based on a backoff counter associated with the first channel being zero; and the backoff counter may be initialized to a random number after at least one of: the end of a first physical layer protocol data unit (PPDU) comprising the second frame; an indication of a successful preamble detection of the first PPDU; or an indication of a successful medium access layer protocol data unit (MPDU) detection; wherein a duration of the transmission on the second channel may be indicated by at least one of: a duration field of the second frame; a transmission opportunity (TXOP) duration field of a first physical layer protocol data unit (PPDU) comprising the second frame; or a length field of the first PPDU, wherein the third frame may comprise at least one of: a clear to send (CTS) frame; a contention free end (CF-end) frame; a trigger frame; a null data packet (NDP); a Quality of Service (QoS) data frame; or a QoS null frame; wherein: the first channel may be an auxiliary primary channel; and the second channel may be a primary channel. The station may start a timer for the synchronization duration after switching an operation to the first channel, wherein the first frame may further comprise an indication of the first and the second channel. A computing device may comprise: one or more processors; and memory storing instructions that, when executed by the one or more processors, cause the computing device to perform the described method, additional operations and/or include the additional elements. A system comprising: a station configured to perform the described method, additional operations and/or include the additional elements; and an access point configured to send the first frame. A computer-readable medium storing instructions that, when executed, cause performance of the described method, additional operations and/or include the additional elements.

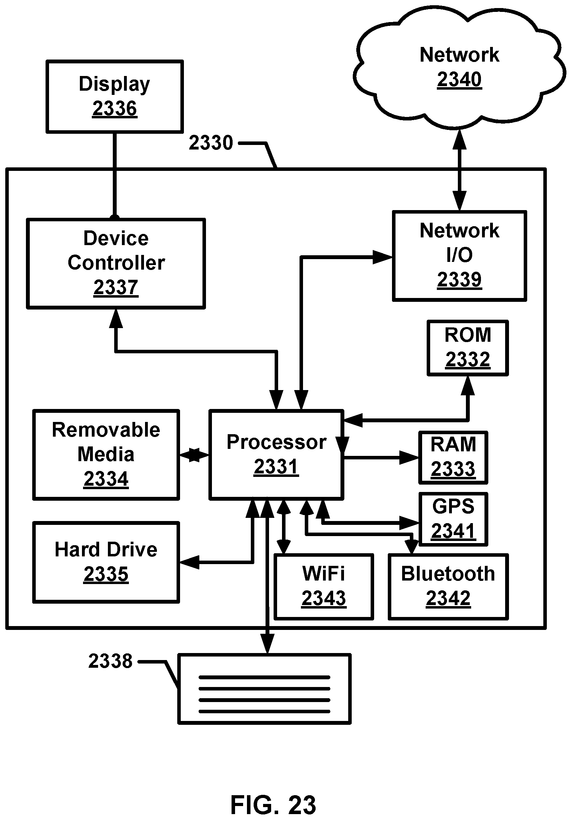

FIG. 23 shows example elements of a computing device that may be used to implement any of the various devices described herein, including, for example, a computing device (e.g., wireless device and/or STA) (e.g., 106-1, 106-2, 106-3, 106-4, 106-5, 106-6, 106-7, 106-8, 702, 704, 802, 804, 902, 904, 1004, 1006), an AP (e.g., 104-1, 104-2, 1002), communication devices (e.g., 210, 260), and/or any computing and/or communication device described herein. The computing device 2330 may comprise one or more processors 2331, which may execute instructions stored in the random-access memory (RAM) 2333, the removable media 2334 (such as a Universal Serial Bus (USB) drive, compact disk (CD) or digital versatile disk (DVD), or floppy disk drive), or any other desired storage medium. Instructions may also be stored in an attached (or internal) hard drive 2335. The computing device 2330 may also comprise a security processor (not shown), which may execute instructions of one or more computer programs to monitor the processes executing on the processor 2331 and any process that requests access to any hardware and/or software components of the computing device 2330 (e.g., ROM 2332, RAM 2333, the removable media 2334, the hard drive 2335, the device controller 2337, a network interface 2339, a GPS 2341, a Bluetooth interface 2342, a WiFi interface 2343, etc.). The computing device 2330 may comprise one or more output devices, such as the display 2336 (e.g., a screen, a display device, a monitor, a television, etc.), and may comprise one or more output device controllers 2337, such as a video processor. There may also be one or more user input devices 2338, such as a remote control, keyboard, mouse, touch screen, microphone, etc. The computing device 2330 may also comprise one or more network interfaces, such as a network interface 2339, which may be a wired interface, a wireless interface, or a combination of the two. The network interface 2339 may provide an interface for the computing device 2330 to communicate with a network 2340 (e.g., a RAN, or any other network). The network interface 2339 may comprise a modem (e.g., a cable modem), and the external network 2340 may comprise communication links, an external network, an in-home network, a provider's wireless, coaxial, fiber, or hybrid fiber/coaxial distribution system (e.g., a DOCSIS network), or any other desired network. Additionally, the computing device 2330 may comprise a location-detecting device, such as a global positioning system (GPS) microprocessor 2341, which may be configured to receive and process global positioning signals and determine, with possible assistance from an external server and antenna, a geographic position of the computing device 2330.

The example in FIG. 23 may be a hardware configuration, although the components shown may be implemented as software as well. Modifications may be made to add, remove, combine, divide, etc. components of the computing device 2330 as desired. Additionally, the components may be implemented using basic computing devices and components, and the same components (e.g., processor 2331, ROM storage 2332, display 2336, etc.) may be used to implement any of the other computing devices and components described herein. For example, the various components described herein may be implemented using computing devices having components such as a processor executing computer-executable instructions stored on a computer-readable medium, as shown in FIG. 23. Some or all of the entities described herein may be software based, and may coexist in a common physical platform (e.g., a requesting entity may be a separate software process and program from a dependent entity, both of which may be executed as software on a common computing device).

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, 6G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, 6G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:
sending, by an access point, a first frame indicating a synchronization duration for a first channel;
receiving, by the access point and via a second channel, a second frame indicating a transmission on the second channel, wherein the synchronization duration starts based on receiving the second frame; and
after receiving the second frame and before an end of the synchronization duration, sending, by the access point and via the first channel, a third frame.

2. The method of claim 1, further comprising:
after receiving the second frame and before an end of the synchronization duration, switching, by the access point, an operation from a second channel to the first channel.

3. The method of any one of claims 1-2, further comprising:
determining, by the access point, a clear channel assessment (CCA) state of the first channel; and wherein:
transmission of the second frame is based on the CCA state of the first channel being idle for a first duration before receiving the third frame;
the CCA state being idle comprises a network allocation vector (NAV), associated with the first channel, being equal to zero; and
the CCA state being idle comprises a received power, measured by the access point on the first channel during the first duration, being less than a threshold.

4. The method of any one of claims 1-3, wherein a duration of the transmission on the second channel is indicated by at least one of:
a duration field of the third frame;
a transmission opportunity (TXOP) duration field of a physical layer protocol data unit (PPDU) comprising the third frame; or
a length field of the PPDU.

5. The method of any one of claims 1-4, wherein:
transmission of the second frame is based on a backoff counter, associated with the first channel, being zero; and
initializing the backoff counter to a random number after at least one of:
an end of a PPDU carrying the third frame;
an indication of a successful preamble detection; or
an indication of a successful medium access layer protocol data unit (MPDU) detection.

6. The method of any one of claims 1-5, wherein the second frame is an overlapped basic service set (OBSS) frame.

7. The method of any one of claims 1-6, wherein:
the first channel is an auxiliary primary channel; and
the second channel is a primary channel.

8. The method of claim any one of claims 1-7, wherein the first frame further comprises at least one of:
an indication of the first and the second channel; or
a management frame.

9. The method of any one of claims 1-8, wherein the second frame comprises at least one of:
a clear to send (CTS) frame;
a contention free (CF) end frame;
a trigger frame;
a Quality of Service (QoS) data frame;
a QoS null frame; or
a null data packet (NDP).

10. The method of any one of claims 1-9, wherein the first frame further comprises an indication of support, by the access point, of an auxiliary primary channel medium synchronization assistance mode.

11. The method of any one of claims 1-10, wherein the first frame further comprises an indication of at least one of:
activation of an auxiliary primary channel medium synchronization assistance mode supported by the access point; or
deactivation of an auxiliary primary channel medium synchronization assistance mode supported by the access point.

12. The method of any one of claims 1-11, further comprising:
after switching an operation to the first channel, starting a timer for the synchronization duration.

13. A computing device comprising:
one or more processors; and
memory storing instructions that, when executed by the one or more processors, cause the computing device to perform the method of any one of claims 1-12.

14. A system comprising:
an access point configured to perform the method of any one of claims 1-12; and
a station configured to receive the first frame indicating the synchronization duration for the first channel.

15. A computer-readable medium storing instructions that, when executed, cause performance of the method of any one of claims 1-12.
